# EUROPEAN PATENT SPECIFICATION

(11) **EP 4 156 642 B1**
(45) Date of publication and mention of the grant of the patent: **15.05.2024**
(21) Application number: 22191418.7
(22) Date of filing: 22.08.2022
(51) Int. Cl.: H04L 45/74, H04L 9/40, H04L 67/568, H04L 67/63

(54) **INFORMATION CENTRIC NETWORK TUNNELING**
INFORMATIONSZENTRISCHES NETZWERKTUNNELN
TUNNELLISATION DE RÉSEAU CENTRÉE SUR L'INFORMATION

(30) Priority: 24.09.2021 US 202117484125
(43) Date of publication of application: 29.03.2023
(73) Proprietor: INTEL Corporation, Santa Clara, CA 95054 (US)
(72) Inventor: SMITH, Ned M., Beaverton, 97006 (US); SRIKANTESWARA, Srikathyayani, Portland, 97229 (US); DOSHI, Kshitij Arun, Tempe, 85282 (US); GUIM BERNAT, Francesc, 08036 Barcelona (ES)
(74) Representative: Maiwald GmbH

(56) References cited:
- US-A1- 2016 014 027
- US-A1- 2017 289 114
- JIANG XIAOKE ET AL: "A survey on Information-centric Networking: Rationales, designs and debates", CHINA COMMUNICATIONS, CHINA INSTITUTE OF COMMUNICATIONS, PISCATAWAY, NJ, USA, vol. 12, no. 7, 1 July 2015 (2015-07-01), pages 1-12, XP011666000, ISSN: 1673-5447, DOI: 10.1109/CC.2015.7188520 [retrieved on 2015-08-11]

## Description

### TECHNICAL FIELD

Embodiments described herein generally relate to computer networking and more specifically to information centric network (ICN) tunneling.

### BACKGROUND

Information centric networks (ICNs) implement protocols and mechanisms where communications between machines for information or computational services are specified by name. This is in contrast to traditional (legacy) networks and protocols in which communications include addresses (e.g., and ports) of specific end-points (e.g., a host Internet Protocol (IP) address). In ICN operations, an interest packet (e.g., request) arrives at an ICN node. The interest packet includes a name for the requested content. If the content happens to be in content store (CS) (e.g., local cache) of the ICN node, the interest is satisfied with the data from the CS. To satisfy the interest, the ICN node transmits a data packet including the content out of the interface (e.g., face) from which the interest was received. If the content is not in the CS, the incoming interest is recorded in a pending interest table (PIT) along with information about the requestor (e.g., incoming face). The interest, if not already in the PIT (e.g., due to some other requestor), represents a new need to seek the requested data from some other node. Accordingly, the ICN node consults a Forwarding information base (FIB) to route the interest forward neighbor ICN nodes. In this way, interests navigate to the nearest node that has the requested data in its content store, or to an original publisher. When the data packet in response to the interest traverses back to the original requester, the intervening PIT entries are used to find the route, akin to following a trail of breadcrumbs, and the data may be cached at each node the data packet traverses.

Edge computing places computing resources close to consumers of services in order to, for example, meet ultra-low latency requirements of these services. Accordingly, compute servers are often situated in close physical proximity to data sources. For example, servers may be situated in cellular base stations These kinds of operating environments are often unique because they are resource constrained environments. The resource constraints may include processing or storage limitations, as well as power. Often mains power (e.g., power provided by a commercial grid operator) is unavailable, and so battery or ambient power generation (e.g., wind or solar) power may be used. Ambient and battery power may fluctuate in time and the power use of applications running at the edge (e.g., demand for edge services) may also fluctuate in time.
Document US 2017 289 114 A1 relates to a method and system for mutating and caching content in a content centric network.
Document US 2016 014 027 A1 relates to methods and systems for caching data objects in an Information Centric Networking (ICN) system architecture.
Paper "Jiang, X.; et al.: A survey on Information Centric Networking: Rationales, Designs and Debates. China Communications, 20150701 China Institute of Communications, Piscataway, NJ, USA. Vol. 12, No. 7. July 1, 2015" discusses rationales of ICN from a perspective of Internet evolution.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a block diagram of an example of an environment including a system for ICN tunneling, according to an embodiment.
FIG. 2 illustrates example configurations for security metadata and a data-chunk, according to an embodiment.
FIG. 3 illustrates an example of label set membership according to an embodiment.
FIG. 4 illustrates an example of a set-limited response flow, according to an embodiment.
FIG. 5 illustrates an example of an information retrieval flow, according to an embodiment.
FIG. 6 illustrates examples of inter-data security metadata tagging, according to an embodiment.
FIG. 7 illustrates an example of implementing a virtual private network (VPN) using ICN tunneling, according to an embodiment.
FIG. 8 illustrates an example of a flow for streaming ICN tunneling, according to an embodiment.
FIG. 9 illustrates an example of selective caching or forwarding based on node vulnerability, according to an embodiment.
FIG. 10 illustrates an example of in-memory encryption based on security metadata, according to an embodiment.
FIG. 11 illustrates an example architecture for hardware assisted lookup (HALO) circuitry in an ICN node, according to an embodiment.
FIG. 12 illustrates an example architecture to use HALO for pending interest table (PIT) lookups, according to an embodiment.
FIG. 13 illustrates an example of a flow to use a hardware assisted, non-blocking, remote procedure call, according to an embodiment.
FIG. 14 illustrates an example of a hardware assisted, non-blocking, procedure call with retry, according to an embodiment.
FIG. 15 illustrates an example of a security-sensitive component architecture for an ICN node, according to an embodiment.
FIG. 16 illustrates an overview of an edge cloud configuration for edge computing.
FIG. 17 illustrates operational layers among endpoints, an edge cloud, and cloud computing environments.
FIG. 18 illustrates an example approach for networking and services in an edge computing system.
FIG. 19 illustrates deployment of a virtual edge configuration in an edge computing system operated among multiple edge nodes and multiple tenants.
FIG. 20 illustrates various compute arrangements deploying containers in an edge computing system.
FIG. 21A provides an overview of example components for compute deployed at a compute node in an edge computing system.
FIG. 21B provides a further overview of example components within a computing device in an edge computing system.
FIG 22 illustrates an example software distribution platform to distribute software.
FIG. 23 illustrates an example information centric network (ICN), according to an embodiment.
FIG. 24 illustrates a flow diagram of an example of a method for ICN tunneling, according to an embodiment.
FIG. 25 is a block diagram illustrating an example of a machine upon which one or more embodiments may be implemented.

### DETAILED DESCRIPTION

ICN protocols and mechanisms are often a good match to edge computing architectures because they are naturally decentralized due to a distributed peer-to-peer model of access, they can resiliently access information throughout the network due to the greedy caching of data at ICN nodes, and they auto-adapt to request patterns through intrinsic multicasting and forwarding strategies. Because ICNs thus focus on naming the data, agnostic of a particular host address or location where data may be produced, on the edge entails edge-wide sharing of the data. However, edge-wide data sharing may create security or privacy issues and may interfere with trusted computing base (TCB) requirements of cloud or edge cloud providers.

In legacy networks, secure access (e.g., prevention of man-in-the-middle (MITM) attacks) is obtained by creating secure channels (e.g., TLS or SSL) between requestors and addressed hosts (or their proxies). Some techniques may limit the anycasting (e.g., sending the packet to any node connected directly by an interface) of interest or data packets to address the security issues. However, avoiding ICN anycasting or differentiating channel-by-channel transfers-which are generally host or location centric-inhibits the scaling and self-adaptive characteristics of ICNs where the security properties are content centric.

To address the security and privacy issues in the context of ICN deployments, new mechanisms that work with the distributed nature of state in an ICN (e.g., state in the form of PIT entries, FIB entries, content stores, etc.) are described herein. In general, the devices, systems, and techniques ensure that only sensitive content is subject to additional overhead, such as encrypted tunneling or cache restrictions. Non-sensitive content is treated like traditional ICN content, being transmitted and cached without throughout the edge.

ICN tunneling tracks the sensitivity of data in security metadata that is affixed to interest or data packets. When an ICN node encounters sensitive data, the security metadata is used to determine how a given node handles the data. This handling may include data being cached with restrictions, forwarding a handle (e.g., reference) to the data instead of the data itself, or establishing an encrypted session with another ICN node. Sensitivity can range across a set of categories from non-sensitive data at one extreme, and extremely sensitive data at the other with varying levels in between.

As noted above, sensitivity of data may be recorded in metadata associated with data either directly in a portion of a data structure that identifies the data by name (e.g., an interest packet or a data packet handle), or indirectly through attribute metadata that is immutably linked with data name, for example through associative means such as hashing, indexing, or combinations of such linkages. In this last example, the metadata is on a given ICN node and retrieved based on the index or hash derived from the interest, data, or data handle structures.

Again, the data sensitivity determines how ICN nodes handle encryption, caching, use of secure storage, anycasting, or other ICN routing functions. Thus, the introduction of data handles (e.g., forward handles) to the ICN protocol enables communication of a returning data packet without exposing the sensitive data itself. The data handle includes the meta data of the data packet without the data itself. A subsequent ICN node may determine, from the security metadata for example, that the ICN node is authorized to handle the data, and establish a forwarding protocol (e.g., encryption technique) to tunnel the data to the ICN node.

In an example, the security metadata defines the options available at any ICN node for receiving, storing, or processing data that may be sensitive. The security metadata may indicate whether a node is attested to be non-vulnerable to physical or logical invasion. This enables emulation of the ICN peer-to-peer communication model while bypassing intermediary nodes that cannot be guaranteed (e.g., pass the attestation) to be sufficiently invulnerable relative to the sensitivity of data they cache or route.

In an example, a non-volatile memory, together with automatic hardware encryption of data in non-volatile memory, may be used for storing content or for storing programs that transform the content or implement capabilities for protecting sensitive data. The incorporation of such hardware encrypted memory (e.g., working memory used to store the state of an operating machine) in the ICN node to selectively cache and or transform data reduces the exposure to input-output (I/O) software or hardware vulnerabilities. Additional examples and details are provided below.

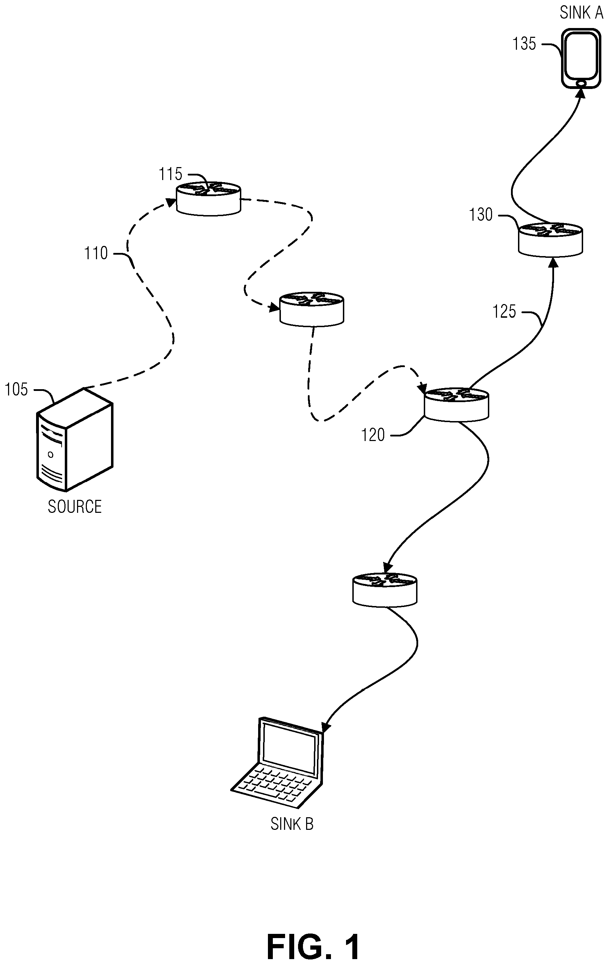

FIG. 1 is a block diagram of an example of an environment including a system for ICN tunneling, according to an embodiment. As illustrated, the system includes a source node 105, several ICN routers, such as the router 115, router 120, and router 130, and several sink nodes, such as sink node A 135.

The links represent the traversal of a data packet from the source node 105 to the sink nodes in response to an interest packet originating from the sink nodes. The dashed connections illustrate links in which the data packet traverses the system without differentiation between the sink node A 135 and the sink node B. This is due to the ICN routers along the dashed links meeting the security requirements set for the data as communicated by the security metadata of the data packet. Again, the security metadata may be absent or empty, in which case the data packet is treated as a traditional data packet in ICNs.

In the case where the security metadata specifies some heightened level of sensitivity over the baseline ICN data handling, the ICN router 120 implements selective anycasting. Thus, the path 125 indicates a point in which the forwarding of the data packet diverges from the ICN router 120 towards sink A 135 from other transmissions of the data packet. In effect, due to the differing security capabilities or level of trust of sink A 135 and sink B, interests from sink A 135 and sink B may be treated as non-fungible requests for the same data.

The following examples operate from the perspective of ICN router 120. ICN router 120, like the other illustrated nodes, includes processing circuitry and a medium for storing instructions that, when the ICN router 120 is operating, configure the processing circuitry.

The processing circuitry is configured to receive a data handle for data that is received at the ICN router 120. As noted above, the data handle is not a data packet, but rather a placeholder carrying the metadata for the data packet. Here, the data handle includes an indication of security metadata. In an example, the indication if the security metadata is the security metadata itself, completely included in the data handle. In an example, the indication of the security metadata is used to lookup some or all of the security metadata in a local store of the ICN router.

In an example, the security metadata includes a policy for data security or integrity with respect to one or more target hardware or software platforms. This example notes that hardware platforms alone may signify differentiating behavior of the ICN router 120. Accordingly, the processing circuitry is configured to treat the data traversing or stored on the ICN router 120 in accordance with the policy matching the hardware platform of the ICN router 120.

The processing circuitry is configured to obtain the security metadata based on the data handle. In an example, obtaining the security metadata includes extracting the security metadata from the data handle. In this example, the security metadata is simply read from the data handle and used below.

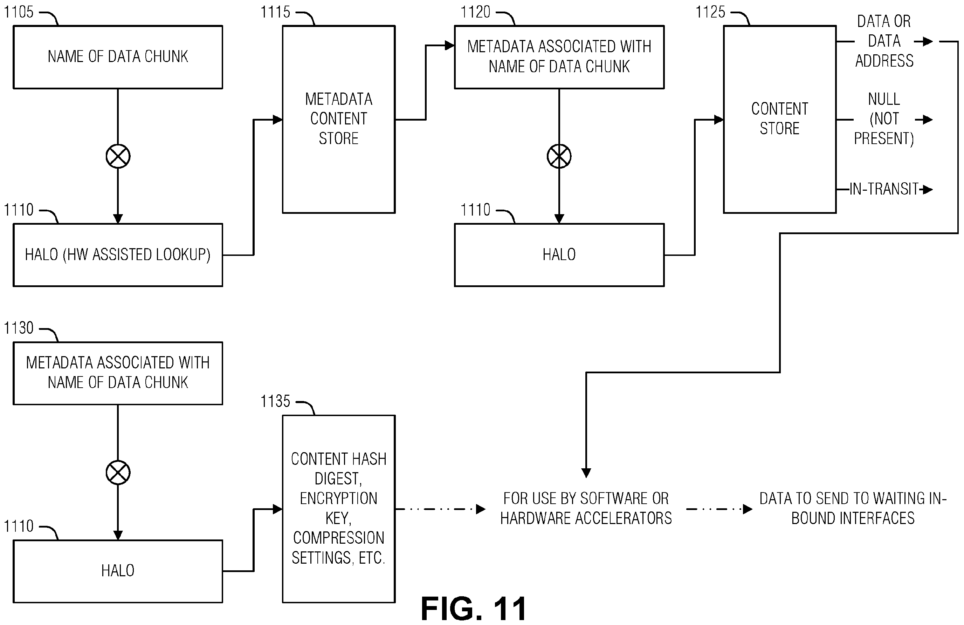

In an example, obtaining the security metadata includes processing a portion of the data handle using a local function (e.g., a hash) to generate the security metadata. In an example, obtaining the security metadata includes extracting an index (e.g., key) from the data handle and retrieving the security metadata from a local repository based on the index. In an example, the ICN router includes hardware assisted lookup circuitry (HALO) to perform hash based lookups. Here, retrieving the security metadata includes using a HALO to lookup the security metadata in the local repository. In an example, the ICN router uses the HALO, or a second HALO, to perform lookups in a content store, pending interest table, or forwarding interest base of the ICN router. Additional details about HALO lookups are provided with respect to FIGS. 11-12 below. In an example, a mixture of extracting security metadata and looking up security metadata from the local store may be used. This example may be helpful to reduce packet overhead when, for example, aspects of the security metadata are relatively stable and may be applied to the ICN router 120 during configuration or through regular maintenance procedures.

The processing circuitry is configured to cache the data based on the security metadata. When the data handle is sent alone, there is no data to cache when the data handle arrives. However, if the data handle is part of a complete data packet, then the security metadata may govern how the data will be cached at the ICN router 120. For example, when the security metadata includes a policy, the data caching may be based a policy directive retrieved from the policy. Here, the ICN router 120 platform information is used to select the policy directive from multiple in the policy. Once the policy directive is retrieved, the processing circuitry applies the policy directive with respect to the data in the local cache. In an example, the policy directive is at least one of no-cache, encrypt, or compress. The no-cache policy directive entails that the ICN router 120 not store the data locally in a content store. The compression policy directive is generally permissive, enabling the ICN router 120 to perform compression when storing the data. Such a policy protects the integrity of data that may suffer due to lossy compression, for example. The encryption policy defines whether encryption is necessary to cache the data. In an example, a second policy directive establishes one of several different levels of encryption based on the ICN router platform information. Thus, for example, if the ICN platform is vulnerable (e.g., to a physical attack), a higher level of encryption may be defined in the policy directive than if the ICN router 120 were implemented on a more secure platform.

The processing circuitry is configured to test an ICN node (e.g., ICN node 130) at an interface of the ICN router 120 for compatibility with the security metadata. In an example, testing the ICN node 130 includes transmitting the data handle to the ICN node 130 and receiving a response from the ICN node 130. Here, the ICN node 130 tests whether the security metadata is in one or more sets installed at the ICN node. The ICN node 130 performs many of the same operations as the ICN router 120 to determine whether the ICN node 130 is authorized to receive the data to which the data handle refers. At this transmission, the data has not yet been sent to the ICN node 130.

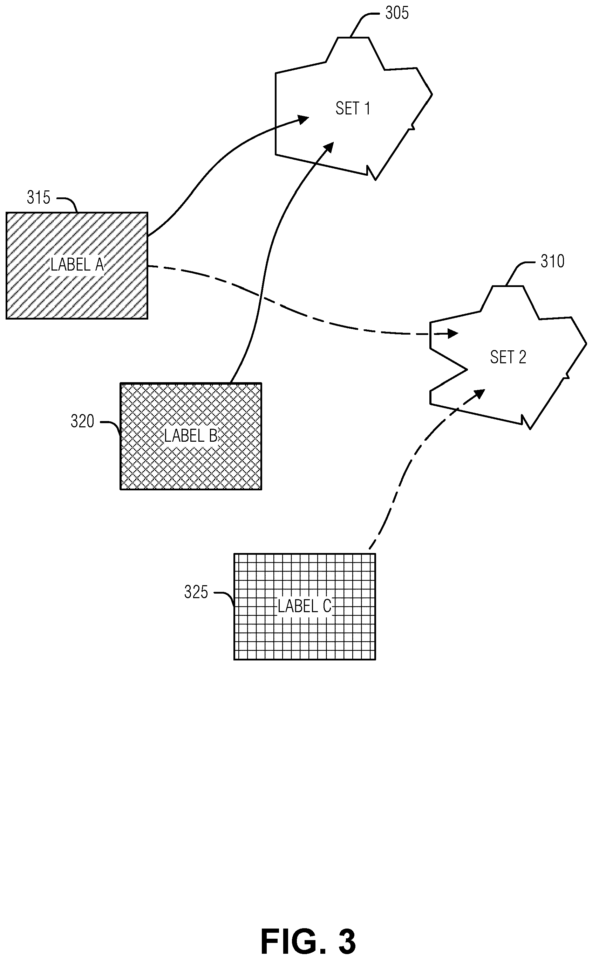

One technique for testing whether a given ICN node is authorized to receive the data involves using a set-membership. Here, the security metadata includes a label indicating a security regime to which the data belongs. Each node, including the ICN router 120, includes one or more sets of labels. If the ICN node has a set that has the security label of the data in the data handle as a member, then the ICN node is authorized to handle the data, possibly in accordance with policy directives attached to the set. Thus, in an example, the processing circuitry is configured to receiving a set definition at the ICN router 120 and use the set definition to respond to tests from other ICN nodes about compatibility with other security metadata. FIG. 3 illustrates the set-membership technique.

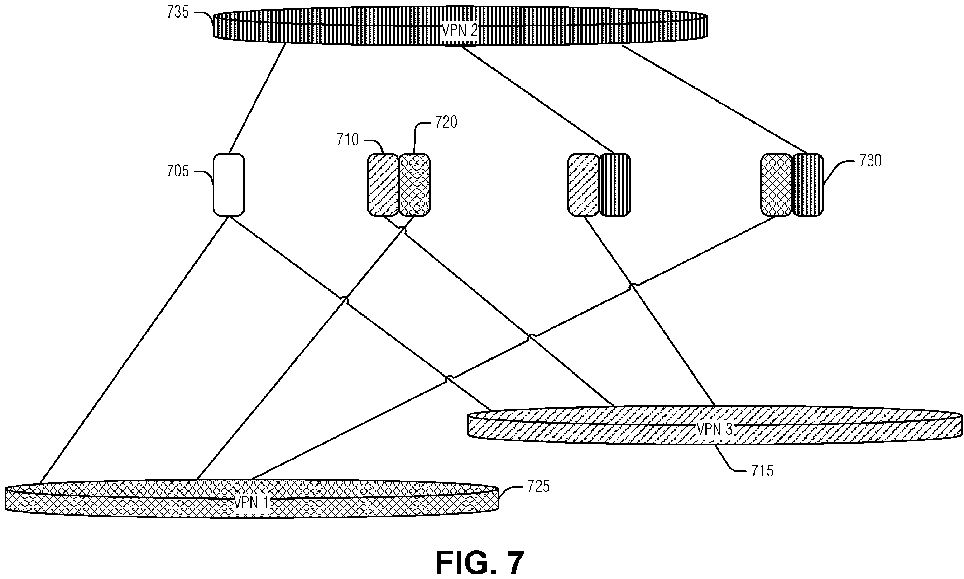

In an example, the set corresponds to a virtual private network. Here, each ICN node with the set definition is a participant in the virtual private network. The set-membership technique provides a convenient way to organize ICN nodes into VPNs as nodes within a given VPN are given the same set definitions. An example is illustrated in FIG. 7.

The processing circuitry is configured to transmit a version of the data to the ICN node 130 based on the compatibility of the ICN node 130 with the security metadata. In an example, when the ICN node is not compatible with the security metadata, the version of the data is the data handle. Transmitting just the data handle may be part-and-parcel to testing the ICN node 130. However, because the data will eventually traverse to the sink A 135, some form of the data will be sent to the ICN node 130 beyond the data handle. In an example, when the compatibility of the ICN node with the security metadata indicates that the data must be encrypted, the version of the data is an encrypted form of the data.

In an example, the processing circuitry is configured to receive an interest packet from a second ICN node (e.g., the sink A 135) connectable to the ICN router 120 through the ICN node 130. Here the interest packet indicates compatibility with the security metadata and an encryption protocol to use. Then, the data is encrypted in accordance with the encryption protocol to create encrypted data. The encrypted data may then be transmitted in a data packet to the ICN node 130 for delivery to the second ICN node (e.g., sink A 135). This communication between sink A 135 and the ICN router 120 establishes the tunnel between the ICN router 120 and the sink A 135 through the ICN node 130. That is, the ICN node 130 cannot access or otherwise expose the data because of the encryption agreed upon by the ICN router 120 and sink A 135.

The nature of the security metadata and the actions applied at ICN nodes because of the security metadata may be varied. For example, the same data may not be sensitive with respect to one ICN node and sensitive with respect to another. This may arise due to platform differences, physical location, or an operator of a given ICN node. When differences occur, potentially the data may be transmitted as different responses to an interest, using different keys for encrypting the data, different data transformations, etc. Thus, the requests may be treated as two distinct requests that are not merged for anycasting. Security metadata (e.g., content labels) is for such discrimination. However, the security metadata may also specify the type of merging that is permitted for each type of content. For example, data may not be so sensitive that it needs to be encrypted but may be sensitive enough that an attestation may be requested by a given ICN node before receiving the data.

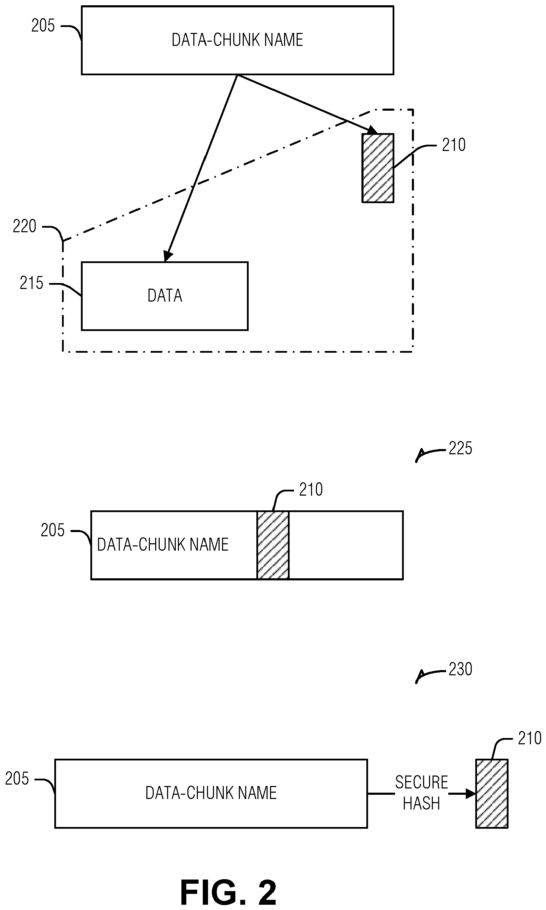

FIG. 2 illustrates example configurations for security metadata 210 and a data-chunk, according to an embodiment. Here, "data-chunk" is used to indicate the payload 215 of a data packet. Thus, the data-chunk name 205 refers to the ICN name of the data 215. The data-chunk name 205 is also used to identify the security metadata 210 of the data packet. The association 220 illustrates that the security metadata 210 is tied to the data 215 by the data-chunk name 205.

In an example, the security metadata 210 is bound to the data-chunk name 205 such that the data-chunk name 205 is self-confirming. This may be accomplished by signing all or part of the security metadata 210 with a private key that is a property of the name of the data, the data creator, owner, or some attribute of the creator, owner, etc. The signature may be verified by decryption with a public key and verifying that the signature contains a hash of the name.

In practice, the association 220 may be maintained in different ways. In the example 225, the security metadata 210 (e.g., signature, label, etc.) is included as part of the data-chunk name 205, or part of the data handle, which also includes the data-chunk name 205.

Another technique is illustrated in example 230. Here, an agreed-upon one-way function (e.g., secure hash) is used to obtain an ID that is used to retrieve the security metadata 210 with which the signature can be retrieved from a distributed key-value-store (KVS), distributed ledger, or other storage structure.

The security metadata 210 may also take sever forms, such as a label, a signature, a set of policy directives, even an executable, or combination thereof. In an example, a label may directly or indirectly describe one of a small number of categories of sensitivity as illustrated in FIG. 3. In an example, for each sensitivity category, a distributed information base-which need not be large)-contains various security policy parameters that shape how ICN intermediaries route and cache data responses from replicas to requestors.

FIG. 3 illustrates an example of label set membership according to an embodiment. FIG. 3 illustrates lookup labels from security metadata as sets on ICN nodes. As illustrated, set 1 305 is installed on a first ICN node and set 2 310 is on a second ICN node. A label set is a bridge between data labels and ICN nodes as follows. A label may be in more than one set, as the illustrated label A 315 is in both set 1 305 and set 2 310, whereas label B 320 is only in set 1 305 and label C 325 is only in set 2 310.

An ICN node may be annotated with a collection of sets. The first ICN node may be annotated to cache data that maps into set 1 305 and set 3 (not pictured) and the second ICN nodes may similarly be annotated to cache data mapping into set 2 310 and set 4 (not pictured). Data that is labeled with label A 315 may be cached in either the first ICN node or the second ICN node. However, if the data is labeled with label C 325, the data may only be cached at the second ICN node. Other logical conditions for caching may be specified. For example, instead of allowing data to be cached at any node that has one or more of the sets to which the data belongs, a node may only be allowed to cache data if it is annotated with all of the same sets to which the data belongs

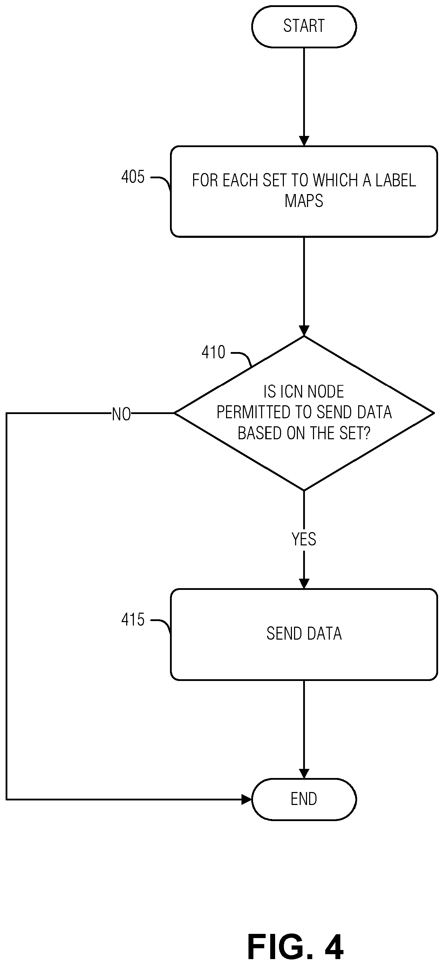

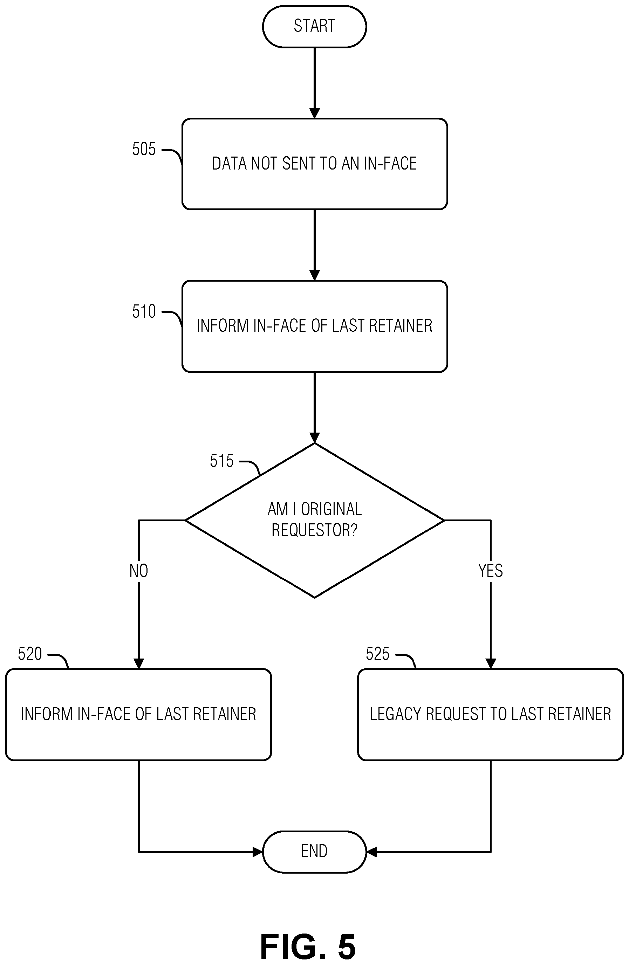

FIG. 4 illustrates an example of a set-limited response flow, according to an embodiment. This flow follows the set discussion from FIG. 3. In general, when a label is obtained from security metadata, an ICN nodes finds sets (e.g., preinstalled or configured on the ICN node) that has the label as a member (operation 405). The ICN node then uses a policy, or other directive, in the found set to determine whether the ICN node may forward the data packet (decision 410). If not, the ICN proceeds in accordance with the flow illustrated in FIG. 5. If yes, then the ICN node sends the data (operation 415), for example, in accordance with the policy of the set.

FIG. 5 illustrates an example of an information retrieval flow, according to an embodiment. This flow addresses the situation when, for example, security metadata (such as a label-set membership) indicates that the ICN node cannot forward the data to the next-hop ICN node. Consider, when a particular ICN node, N8, receives a data response D, N8 may also receive a data handle (e.g., a LAST-RETAINER HANDLE). The LAST-RETAINER-HANDLE identifies that ICN node which has indicated it has the data in its content store. Assume that N8 receives the data handle from N16 and N16 has the data also in its content store. Further assume that N8 cannot receive the data and retain it due to the data label for the data. Then, N8 sends to its in-faces (e.g., incoming interfaces), not the data but a last-retainer-handle that identifies N16 as the holder of the data of interest. Accordingly, the next ICN nodes down the chain may request data from N16 through encrypted channels or instruct N16 to encrypt and send data with a label for the encrypted data that allows the encrypted data to be forwarded by intermediate nodes including N8, and further allows the encrypted data to be cached by intermediate nodes including N8.

As illustrated, the ICN node recognizes that it has not received the data but rather a data handle (operation 505). The data handle is forwarded through an in-face (e.g., an interface from which the original interest was received). The in-face determines whether it was the original requestor (decision 515). If no, then the in-face transmits the data handle instead of the data (operation 520). Otherwise, the in-face transmits a request to the node holding the data to retrieve the data.

In an example, ICN node sets may be known to each forwarder through a distributed ledger, or other configuration data source. This type of out-of-band update to the set may reduce the need to trust individual ICN nodes with content caching or forwarding decisions.

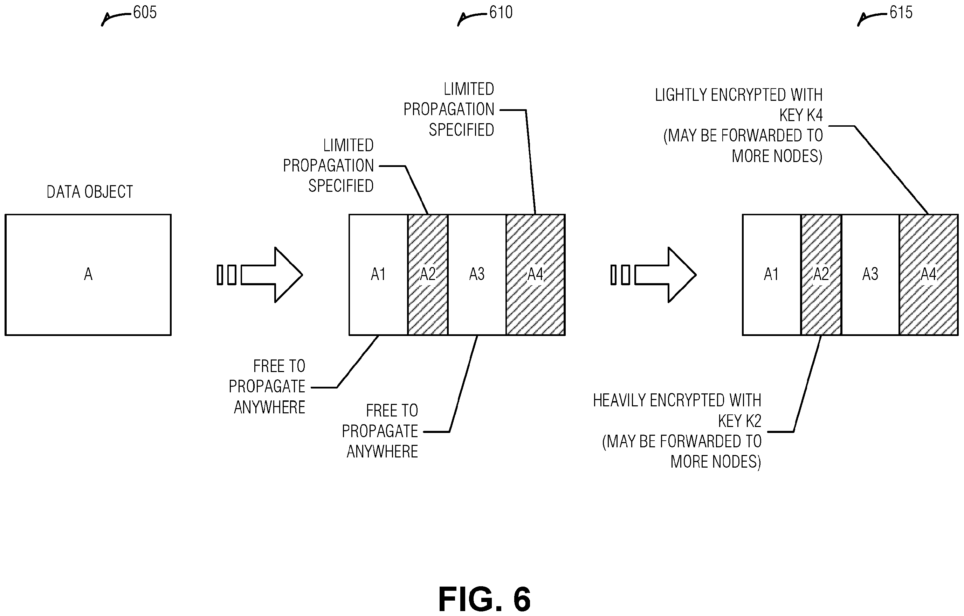

FIG. 6 illustrates examples of inter-data security metadata tagging, according to an embodiment. This may also be described as data splitting and sub-labeling. It is common for many data objects to be large and shareable very widely just as they are, but have some small sub-regions within themselves that are not widely sharable. For example, a video file may be many hundreds of mega-bytes large but may have a small portion within it that need to be content-filtered or access-filtered so that only a small group of requestors may access those portions freely. Such filtering may be for reasons of security, privacy, charging for premium content, proof of receipt, etc. Making multiple copies of such data objects may not be cache nor bandwidth friendly.

To address these issues, a data object A 605 may be split into parts (e.g., A1, A2, A3, A4) with metadata for the data object specifying how those subparts are to be treated differently. Object 610 illustrates this split from data object A 605. Thus parts A1 and A3 in object 610 may be free to propagate anywhere, while A2 and A4 have to be handled differently. Object 615 illustrates that even the sensitive parts, A2 and A4, may not be equally sensitive. Here, the metadata may indicate that they are to be differently encrypted for example. As illustrated, A2 is heavily encrypted and therefore may be shared more broadly, while A4 is lightly encrypted and sharing is more restricted.

In an example, the data object A 605 may be compressed, and then its compression dictionary may be encrypted and stored in a small segment such as A2 or A4. In this case, the data dictionary itself acts like an extended encryption key but does not create decryption overhead (aside from decrypting the dictionary) in addition to decompression overhead. If the content is not particularly compressible, then, in lieu of compressing the content, a compressible mask may be used to exclusive OR (XOR) the content. Here, the mask may be compressed and encrypted as the data object A2 or A4.

The lightly encrypted data A4 may be subject to an offline attack, possibly resulting in the data being disclosed in clear text and widely circulated. The decision to use light encryption may thus be taken in the context of other factors such as physical security or the relative value of the data. For example, data may have temporal value such as stock ticker, temperature sensor readings, instant messages, etc., that will mean little in a short period of time. In an example, key management may play a role in how widely circulated data may be. If the key management system circulates a key to a narrow set of nodes, the ICN routing may take the key management behavior into consideration.

FIG. 7 illustrates an example of implementing a virtual private network (VPN) using ICN tunneling, according to an embodiment. Labels and metadata that are securely bound to data names may be used to define an analog for VPNs. In a traditional VPN implementation a physical network is multiplexed into several VPNs. This similar behavior is achieved by allocating certain sets to certain VPNs. As illustrated, the sets (in the middle) match the shading of the VPN to which they belong. Thus, VPN 1 725 matches the set 720, VPN 2 735 matches the set 730, and VPN 3 715 matches the set 710. The set 705 is associated with all of the VPNs, representing a common network for the VPNs.

Some nodes (e.g., routers, boundary nodes, gateways, etc.) in the multiplexed physical network , may belong to more than one VPN (e.g., routers, boundary nodes, gateways, etc.). Such nodes may implement bridging to forward data between VPNs according to the ICN protocol. Others which are only in one VPN at any time, may implement normal ICN forwarding and caching protocols for the data that is set-label associated with that VPN.

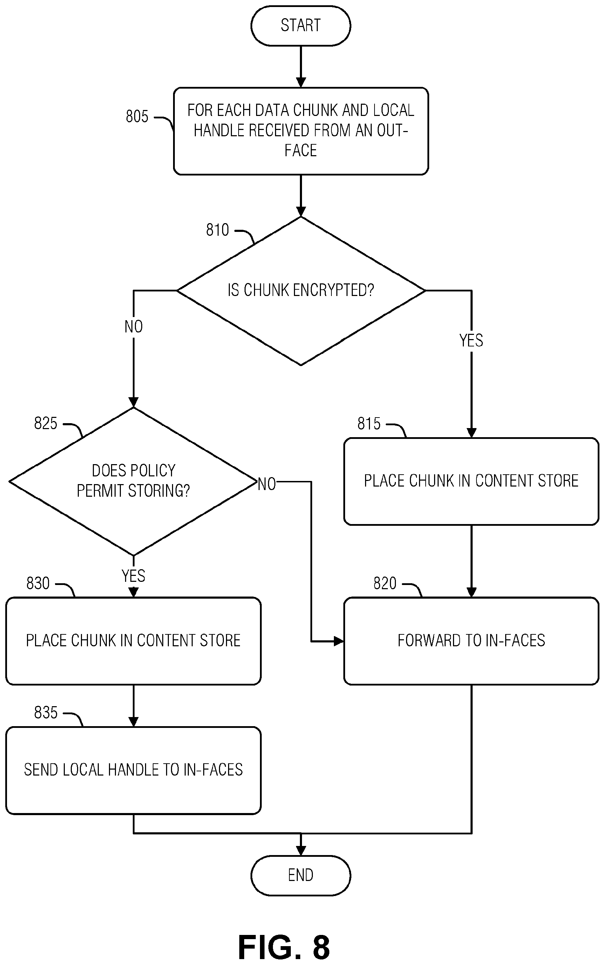

FIG. 8 illustrates an example of a flow for streaming ICN tunneling, according to an embodiment. In general, streaming data protocols are designed to minimize latency and to permit pipelined or streamlined movement of data that is accessed in a streaming fashion. A vast majority of such data may flow without undue overheads, such as encryption or decryption, data transformation, filtering, etc. The technique illustrated in FIG. 8 facilitates streaming data in an ICN tunneling, which includes selectively applying the security over such streaming data as may require control over who can forward it, who can cache it, etc.

Each node that receives a chunk of the data being streamed (operation 805) checks if the data is encrypted (decision 810). If the data is encrypted, the node caches the chunk (operation 815) and forwards the chunk to an in-face (e.g., in accordance with a PIT entry for the data) (operation 820). If the data chunk is not encrypted, the node determines whether or not its policy permits data to be stored locally and shared downstream or whether the node can only forward a data handle to the last retainer (decision 825). If local storing is not permitted, the chunk is forwarded to the in-face (operation 820). If local storing is permitted, the chunk is cached (operation 830) and a data handle is sent to the in-faces (operation 835). In an example, the in-faces later reactively pull the data or only pull the data lazily, according to various local configurations at the in-faces.

The differences between the stream and non-stream approaches acknowledge that the decisions are being made according to the local policy for handling streaming data chunks-which may only be cached for very short durations in time but are cached with high priority-sufficient to cover the buffering time for the stream. Thus, if data is not encrypted, and the policy requires non-storing of data, then a target receiver or content replica cache downstream may set up a traditional end-to-end secure sockets layer (SSL) or transport layer security (TLS) channel (e.g., using a legacy addressed based technique) with the last-retainer for the entire data stream. A stream may be un-encrypted in some parts and encrypted in others.

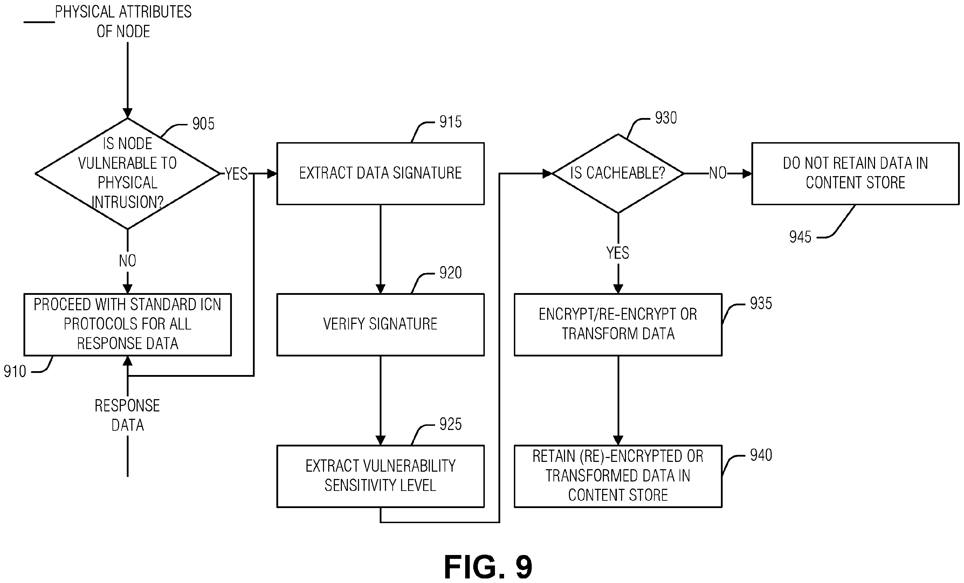

FIG. 9 illustrates an example of selective caching or forwarding based on node vulnerability, according to an embodiment. physically vulnerable edge infrastructure addresses the physical security vulnerabilities of many edge nodes. Unlike data center clouds, edge clouds comprise some nodes where the physical protections are marginal and the nodes are vulnerable to intrusion, spoofing, jamming, etc. FIG. 9 illustrates a selective caching and content forwarding principle applied to edge nodes that are vulnerable as described (e.g., by configuration) through an ICN management interface. Node vulnerability may be determined according to various factors, such as the ability to be physically assailed. The factors inform whether or not such an edge node is permitted to cache sensitive data at all, whether it can do so in protected storage (e.g., encrypted, or self-erasing storage or otherwise auto-protecting portable device), or whether other precautions will be taken given the specific vulnerability of a given node.

The difference between node vulnerability and other aspects of node trust discussed above (e.g., in the context of a VPN) involve the ability of a node to be not "currently" trusted according to the physical attributes configured for that node. For example, the node may be a virtual machine that is at one moment hosted in a secure host, and may readily cache, and at another instant may be located (for load-balancing, recovery, or other reasons) in a less secure host. Or the node itself is a physical machine that is by itself highly intrusion resistant, but is located in a physically less secure infrastructure or in an infrastructure that is subject to logical intrusion (such as placement of wireless sensors by an unscrupulous third party).

The determination of node vulnerability (e.g., to physical intrusion or other attack) may be assessed dynamically by an ICN router or gateway node that interfaces to a network of lower security nodes or a mixed network of lower and higher security nodes but where intermediate layers and protocols do not reliably preserve the vulnerability context. An edge ICN node may prevent access to a more secure side of the network, holding the ICN packet in quarantine, then perform an attestation protocol via a side channel to the node originating the data, until an attestation result authorizes a level of trust commensurate with the destination network security level.

As illustrated, the node's vulnerability to physical intrusion is assessed (decision 905). If the node is not vulnerable, data flow may progress as normal (operation 910). Otherwise, a data signature (e.g., security metadata) is extracted from the data (operation 915), the signature is verified (operation 920), and a sensitivity level of the data to the vulnerability is obtained from the signature (operation 930).

The sensitivity level given the vulnerability may determine whether or not the data is cacheable (decision 930). If no, the node does not keep cache the data (operation 945). If yes, the node encrypts, or otherwise transforms the data in accordance with the signature (operation 935) and caches the result (operation 940).

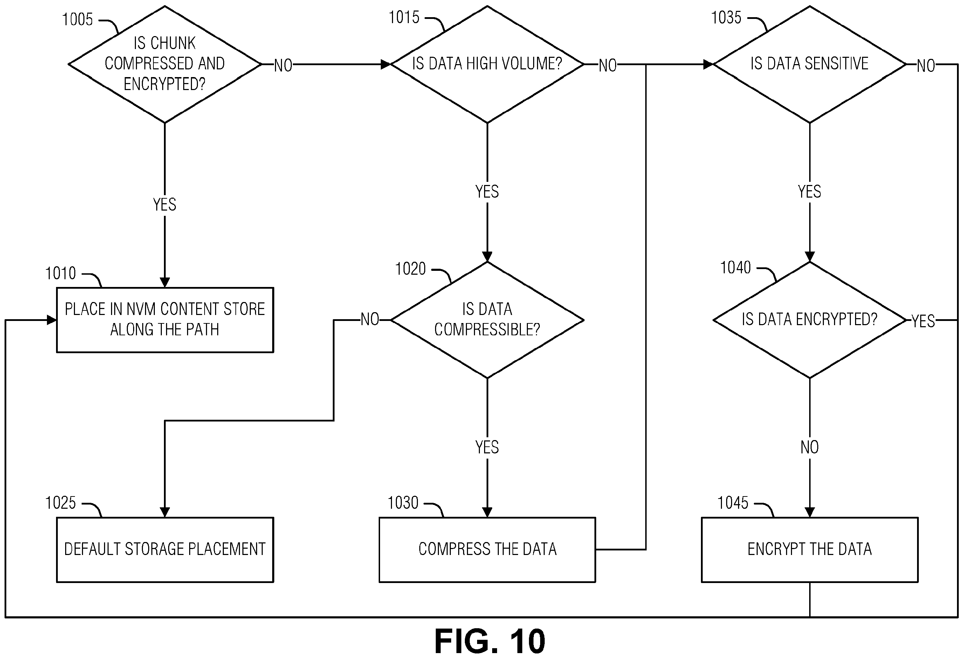

FIG. 10 illustrates an example of in-memory encryption based on security metadata, according to an embodiment. This example makes use of large capacity non-volatile memory with hardware encryption at the ICN node. Such storage, together with memory or CXL bus controllers, may be used to keep data encrypted in memory. Even with large capacity non-volatile storage, it may be necessary to ensure that data kept in an encrypted store not be very large since memory capacity is still limited in comparison to block storage (e.g., capacity is limited by the amount of physical addressing possible, the number of DIMM slots, the amount of memory that can be accessed over CXL, the amount of power available, etc.) Accordingly, a security policy or a caching policy for data may coordinate caching and compression. Generally, compression precedes encryption of cached data, and decryption precedes decompression.

As illustrated, a determination of whether a data is compressed or encrypted is made (decision 1005). If yes, the data is stored in the content store as is (operation 1010). If no, a determination as to whether the data is high-volume is made (1015). High-volume may be determined by statistical analysis of packet flows through the node, or simply represent a count above a threshold. If the data is high volume, a determination is made as to whether the data is compressible (decision 1020). If no, the data is placed in default (e.g., unencrypted) storage 1025 for large data-which may be separate from the standard content store of the node. If yes, the data is compressed. If the data is not high-volume (decision 1015) or has been compressed (operation 1030), the node determines whether the data is sensitive (decision 1035) (e.g., from the security metadata or node vulnerability). If no, the data is placed in the content store (operation 1010). If yes, the determination is made as to whether the data is encrypted (decision 1040). If yes, the data is placed into the content store (operation 1010). If no, the data is encrypted (operation 1045) and then placed in the content store (operation 1010).

FIG. 11 illustrates an example architecture for hardware assisted lookup (HALO) circuitry in an ICN node, according to an embodiment. ICN nodes generally are involved in many table lookups to perform PIT entry matching, FIB matching, or content store retrievals. These constant lookups may cause ICNs to perform poorly compared to legacy address-based content-data-network (CDN) techniques. To address this issue, hardware assisted lookup (HALO) circuitry 1110-e.g., a programmable tertiary content associative memory (T-CAM)-may be used to speed these lookups.

In an example, HALO is implemented by a programmable hardware acceleration mechanism that supports create/retrieve/update/delete (CRUD) operations over a range of memory described to it by a configuration, and which continues into a software-backed associative lookup when it cannot resolve in hardware, a key to yield a value. HALO facilitates ICN operations because ICN operations are generally very intensive in the use of associative lookups to map arbitrary bit-strings (e.g., names 1105, embedded metadata 1130, or local metadata 1120) to addresses of various objects in content stores (e.g., control meta data 1135, local metadata 115, or a content store 1125) . However, in addition to mapping names 1105 to data structures, ICN implementations also generally map names 1105 to various control structures such as PIT entries, FIB entries, and more generally, to map between names and various information control metadata 1135 such as hash digests, encryption keys to be used, signatures to be verified, etc. Each time an Interest packet arrives, the PIT, content store 1125 and potentially the FIB must be looked up. Depending on the length of these tables, such operations may consume a lot of time. While such lookups may be implemented in software, it may be prohibitively expensive to perform so many associative searches. This may be an underlying reason why ICNs compare poorly in relation to legacy CDNs where content caches are intentionally organized for different purposes and located at strategic places for efficient aggregation and dissemination of content.

HALO 1110 addresses these issues by supporting the multiple lookups into the content store 1125, PIT, FIB, and other structures to remove a significant performance penalty that repeats over and over at each ICN node.

In an example, HALO may be implemented as a confidential computing element in the platform. Because HALO is implemented in hardware, HALO may be associated with a device root of trust. In this way, the T-CAM capability is not just accelerating performance but also enhancing content security by removing the need to trust software infrastructure to provide the necessary protection from malicious or accidental side channels.

In an example, the illustrated metadata content store 1115 is new to ICN. Here, the meta data associated with the content or compute function is stored. This enables a client or user to request a class of data rather than one particular type of data or compute function.

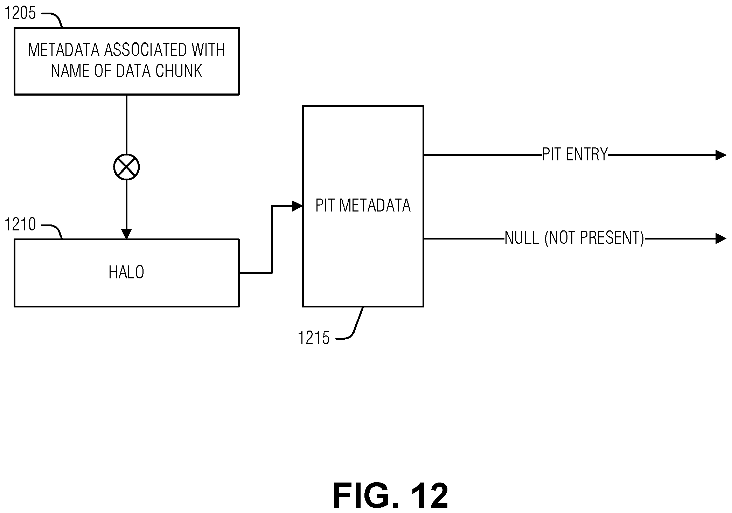

FIG. 12 illustrates an example architecture to use HALO for pending interest table (PIT) lookups, according to an embodiment. As noted above, each time a data packet arrives, a PIT lookup will occur. The metadata associated with the data chunk 1205 is used to perform an associative lookup assisted by HALO 1210 into a PIT metadata structure 1215. This leads to swift identification of one or more PIT entries (or a NULL if there are no PIT entries). In an example, it is possible, for a given ICN variant, to either consolidate all the pending interest information for a given data chunk into a single entry, or maintain it as a list or some other iteratable structure, for each different in-face or out-face associated with that interest. Further, it is possible for some variants to consolidate multiple related data chunks into a single interest at a higher granularity of data names.

In an example, HALO 1210 may be configured to perform metadata optimized FIB operation. Data definition schemas are a form of metadata that 'accepts' a data set if the data fits within the parameters defined by the schema. The schema may identity a range of values the data may hold, the structure of data in terms of maps, groups, arrays, enumerations and so forth. The data definition schema may be realized in a machine-readable form such as JSON, CBOR, XML.

In general, for every data set there are zero or more metadata schemas that 'accepts' the data set. Also, for a given metadata schema, there are zero or more data sets that are accepted by the schema. Accordingly, for a given data set, there is intrinsic interest in the metadata schemas that accept it. Likewise, for a given metadata schema there is intrinsic interest in the data set that is accepted by the schema.

ICN routing nodes may leverage intrinsic interest to optimize efficiency by scanning the content store containing both data and metadata to find data that is accepted by the metadata schemas. If the FIB contains a route for a data set in the content store and the node finds a metadata schema that accepts that data, then the node may automatically add a FIB entry for the matching metadata schemas. Similarly, if there are PIT entries for a data set and the result of a scan finds interested metadata, the PIT entry may be updated to include interest packets for the metadata.

The inverse case is also considered where a FIB or PIT 1215 may contain metadata and a scan of the SC reveals data that is accepted by the metadata. This may result in the data being listed in FIB and PIT 1215 according to the routing context already in place for the metadata.

Furthermore, the ICN may accommodate discovery of the discovered intrinsic connection between data and metadata by updating discovery tables to reflect the existence associated metadata. Additionally, a response to a PIT request, may include an unsolicited or suggested interest in the metadata that accepts the interested data (or the inverse where interest in a metadata schema my produce a response that includes references to data sets that are accepted by the metadata).

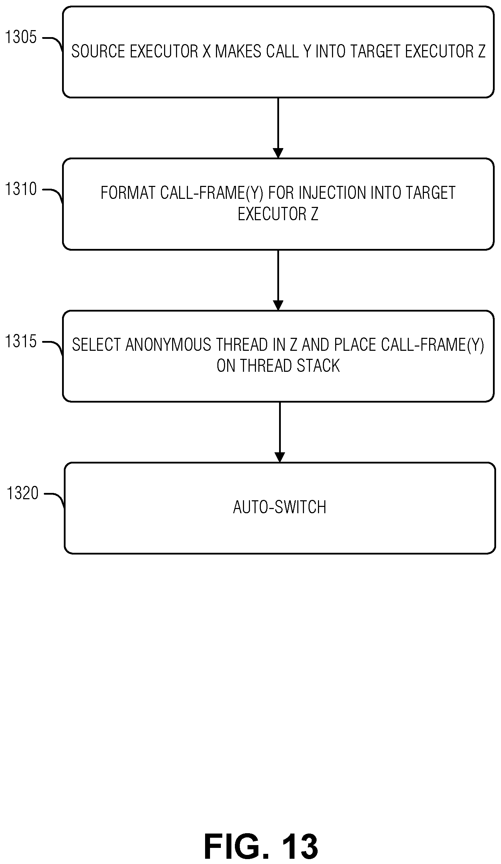

FIG. 13 illustrates an example of a flow to use a hardware assisted, non-blocking, remote procedure call, according to an embodiment. Another common operation in ICN nodes is the need to perform logically distinct operations repeatedly in the course of serving various request flows. For example, the tasks of performing operations on CS, PIT, FIB, and of performing sends and receives of messages are all logically separable into separate blocks of operations that may be organized as unit microservices or as serverless functions capable of being scaled independently. This is particularly true when content stores, the PIT, the FIB, etc., are not just in local memory in each machine, but are in virtual memory that may span a clutch of tightly connected storage elements in a high-performance fabric - such as a compute express link (CXL) based memory pools, storage side caches, multi-tiered memory, etc. Organizing these unit operations as microservices gives an ICN the ability to scale each microservice or serverless function independently, and to benefit from heterogeneous compute, storage, and fabric elements that may be present in a cluster.

The drawback to a microservice or serverless function decomposition, however, is that software has to be carefully optimized in order to reduce the number of cross-address space calls among the microservices or serverless functions instances. To address this issue, hardware facilitated inter-service procedure calls may be used. This uses a combination of an enhanced relay capability for channeling function calls from one microservice or a serverless function to another serverless function or RPC handler in another microservice directly through hardware, eliminating the need for costly marshalling and security enforcement in software. A hardware assisted dispatch of a call-frame into the target execution environment-e.g., a programmable hardware interrupt handler which does not interrupt software but uses an anonymous thread for injecting the call-may also be employed. This results in hardware-assisted fire-and-forget operations (HAFAF).

Many of the ICN processing flows do not use return values. For example, when a request for a data chunk arrives, and it is determined that it is already available in the local content store, the remainder of the operation involves retrieving the data chunk from the CS and sending the data back. Similarly, when a response packet arrives from an out-face, three operations need to be performed and they can each be run to completion in parallel: a) entering the received data into the CS, and extracting and entering any metadata about the data chunk into a metadata store, b) looking up the PIT and responding to each in-face that has the interest entry in it for the received data chunk-followed by clearing those PIT entries-and c) computing various latency statistics and updating the FIB. Such fire-and-forget operations have the quality that they can be handed off to specialized hardware or to anonymous handler threads to perform the fire-and-forget actions without adding latencies to one another if any processing resource is available (e.g., there are not various threads waiting in request or response event loops). In general, it is not desirable to tie up processors in various wait states while hardware assists like HALO or remote function calls are working. ICN protocol interactions-like handling a request thread, publishing a response, looking up the content store, or marshaling data into it or out of it-are generally highly mechanical and hardware accelerable specialized actions that only consume intermittent attention from software that implements the ICN protocol engine in each node.

The illustrated HAFAF technique is started when a source executor (e.g., parent process or microservice) makes a HAFAF remote call with a no-return indicator (operation 1305). Because the return value is not needed, the context is simplified, enabling the hardware to format the call for injection into the target hardware (operation), select a resource like an anonymous thread in the target hardware and place the formatted call into the execution stack of the thread (operation 1315), and switch an execution context to the thread to process the instruction (operation 1320). The parent thread may continue processing other instructions without waiting for the remote call to complete.

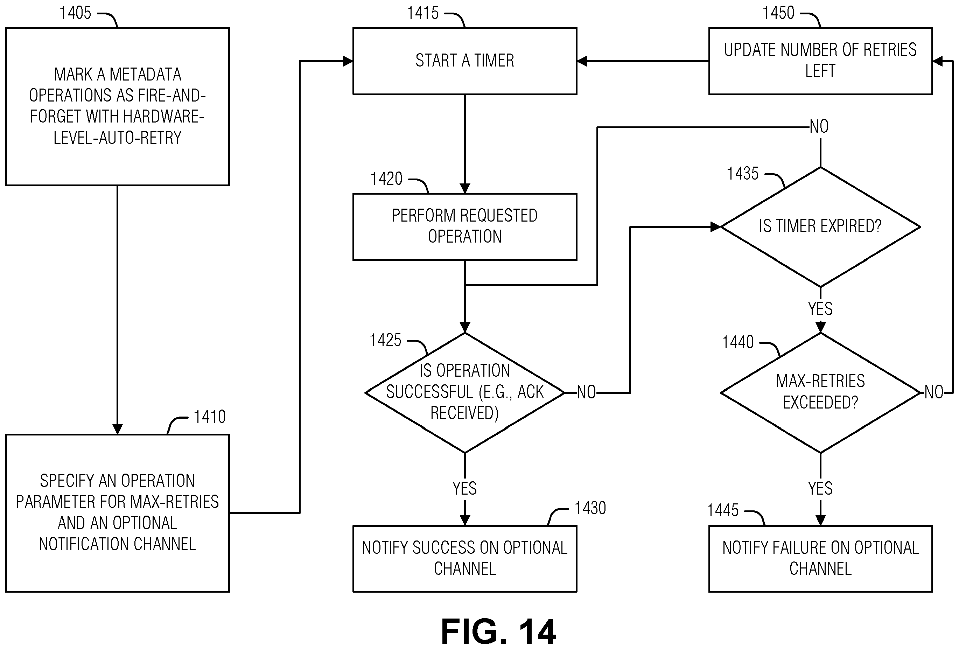

FIG. 14 illustrates an example of a hardware assisted, non-blocking, procedure call with retry, according to an embodiment. Here, the flow for a HAFAF process with optional error or return channels and a failure-retry model is illustrated, depicting support for handing over FAF processing to specialized hardware, or even performing it in software with small assistance from hardware for monitoring and notifying software when a fire-and-forget operation runs into an error, which is generally rare, and should be treated as an uncommon case that needs to be handled promptly.

As illustrated, a HAFAF call is made that specifies auto-retry (operation 1405). The retry parameters, as well as the optional notification channel parameter, are extracted from the call (operation 1410). A timer is started (1415) and the operation is performed (operation 1420). At this point a loop is entered waiting for a success or failure to the operation. If the operation is immediately successful, the success is acknowledged on the notification channel (operation 1430). Otherwise, the timer is consulted (decision 1435). If the timer has not expired, the loop continues. If the timer has expired, a check is made as to whether the maximum number of retries has been reached (decision 1440). If yes, the call failed, and a notification may be made on an error channel, if available (operation 1445). Otherwise, the number of retries is decremented (operation 1450), the timer is started again (operation 1415), and the call is once again attempted (operation 1420.

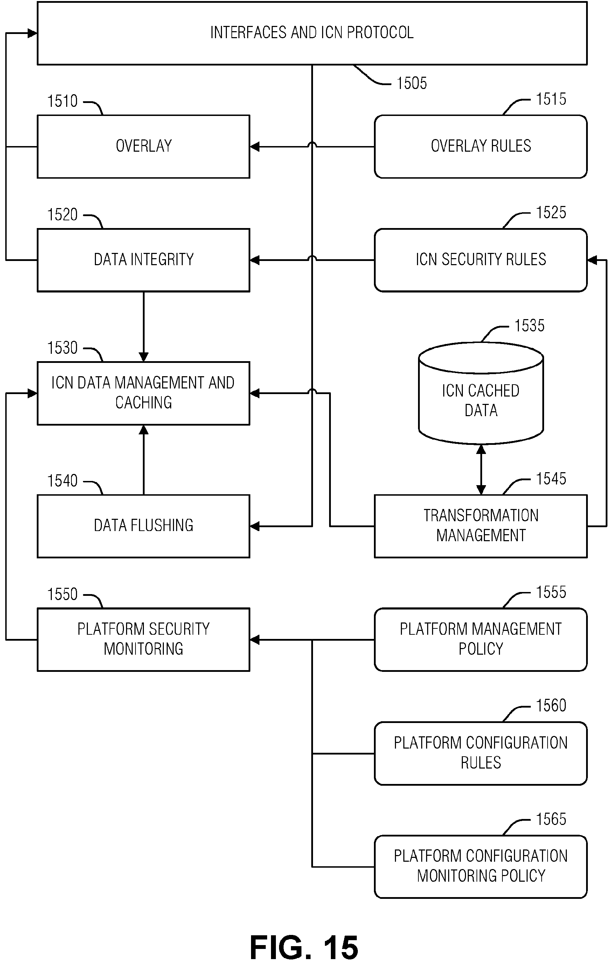

FIG. 15 illustrates an example of a security-sensitive component architecture for an ICN node, according to an embodiment. The various devices, systems, and techniques described above change ICN protocols to treat sensitive data differently from non-sensitive data. Data is identified as sensitive, where sensitivity can range across a set of categories from non-sensitive data at one extreme, and extremely sensitive data at the other. Sensitivity of data is recorded in metadata associated with data either directly in a portion of a data structure that identifies data by name, or indirectly through attribute metadata that is immutably linked with data name through associative means such as hashing, indexing, or combinations of such linkages. The sensitivity of data determines how ICN nodes handle a) encryption, b) caching, c) use of secure storage, d) anycasting etc.

The concept to forward handles to data (e.g., data handles) when it is not possible to move sensitive data without risking exposure is described above along with the introduction of metadata that describes the options available at any ICN node for receiving, storing, and processing data that may be sensitive, including metadata that indicates whether a node is attested to be non-vulnerable to physical or logical invasion. FIG. 15 illustrates some components that may be used to implement aspects of these concepts. These components, or building blocks, may implement how data is cached and managed in the described architecture. The focus of the presented architecture is how-using the concepts introduced above-to enable (1) mapping security methods into a data management and caching architecture; (2) consistently updating data caching security policies across ICN networks, which may be global updates or per overlay of network updates; (3) enabling new security policies depending on data mutation over time; (4) incorporating temporality and time-to-live (TTL) on the various ICN nodes to the cached data-which may enable more advanced caching schemes for data that may be more sensitive over time or where the control is more relevant; or (5) relating node characteristics (e.g. devices connected, firmware versions, etc.) to the management of the secure data. For example, a certain level of security maybe related to a certain type of node configuration (e.g. trusted platform module (TPM)). If changes in the node configuration are detected some level of data flushing may necessary.

In an example, the interfaces and ICN protocols circuitry 1505 is configured to receive updates from peers on the ICN network. For example, if data needs to be updated with a new security metadata, the interfaces and ICN protocols circuitry 1505 is configured to update a data certain object metadata associated to its security characteristics (e.g. security requirements). Note that this may imply that if the new security policy (e.g. platform configuration, node domain etc.) is not satisfied anymore it will be flushed from the cache.

In an example, the interfaces and ICN protocols circuitry 1505 is configured to retrieve a last-known catcher for a particular object ID. The ICN cached data includes both objects stored locally but as well peers that may own a copy of an object of a particular ID that may not be cached local due to security concerns.

In an example, the interfaces and ICN protocols circuitry 1505 is configured to cache object ID with a given name, set of metadata (e.g. size, organization etc.) and security policy (e.g. characteristics of the nodes that can cache the object, location of the node, tenant or owner of the node etc.

In an example, the interfaces and ICN protocols circuitry 1505 is configured to flush objects of a given type of with certain security metadata.

In an example, the interfaces and ICN protocols circuitry 1505 is configured to communicate with the ICN peers or peers within overlay updates on: (1) objects cached in the node that may mutate and may change their characteristics; (2) new objects generated with certain security policies; (3) changes on the platform configuration.

In an example, the overlay circuitry 1510 is configured to use the overlay rules 1515 to manage characteristics of the overlay where the node belongs to and perform communication between the node and the other peers. For example, the overlay circuitry includes a list of different overlays where the node belongs to. The overlay rules 1515 include are mapped in to overlay securities ID. Each of the overlays may have an overlay security ID that may be mapped into the cached objects. The security ID will include a rule defining the level of security required (e.g. characteristics of the node, domain, location etc.). These overlay security ID will be shared across all the different nodes participating into the overlay. Objects mapped into the overlay may only be visible to the participants of the overlay.

In an example, the overlay circuitry 1510 is configured to consistency of updates of objects cached in the ICN cached data with respect to the peers as well as update to the peers on: (1) changed on cached objects; (2) changes on the node configuration or characteristics.

In an example, the overlay circuitry 1510 is configured to use the abstractions provided by the ICN data management and caching circuitry 1530, and data consistency circuitry 1520 to perform the same functionalities within a given overlay. The overlay enables a set of security rules that are common and consistent across peers within the same overlay and use the security ID abstraction to keep them coherent across all the nodes.

The ICN data management and caching circuitry 1530 and the object cache 1535 are configured to manage all the various objects that are being cached inside the node as well as their security metadata. Every object hosted in the object cache 1535 may include:
- The object name and associated metadata (e.g. tenant owner etc.);
- If the object is not cached locally (e.g. because of eviction or because of security reasons), a list of peers caching the object and under what circumstances the object was cached (e.g. hash configuration of the object);
- The payload of the object in case that the object is cached locally (e.g., the ICN data management and caching circuitry 1530 does not enter into what parts of the payload are being encrypted and which not); or
- The overlay security ID if the object belongs into a ICN overlay.

The ICN data management and caching circuitry 1530 is configured to manage the objects cached in the object cache 1535 as well as to expose interfaces to be used by the other blocks in order to: (1) update or remove objects; or (2) flush objects with certain characteristics (e.g., belonging to a particular overlay security domain or that are of a given type).

The data integrity circuitry 1520 builds on top of the ICN data management and caching circuitry 1530 to keep the security metadata or properties associated to a given object consistent. For example, any software entity that has the rights to update specific security constraints or metadata associated to an object (e.g. type of platform, location etc.) may configure the data integrity circuitry 1520-e.g., via the security rules 1525-to update the information associated to the object, or to identify whether the object, if being cached locally needs to be flushed (e.g., in coordination with the object cache 1535) and broadcast to the known peers in the ICN the new update on the object. In an example, this involves only updating the peers within an overlay.

The data flushing circuitry 1540 is configured to perform updates and modifications across all the various objects. This block may be invoked by the other blocks when flushing actions are identified (e.g. because of new security constraints).

The transformation management circuitry 1545 is configured to track how objects are being modified by the compute elements within the platform and identify potential transformations to new types (e.g. by accessing header information or performing more advanced processing on the object). In an example, a transformation rule (e.g., stored inside the ICN security rules 1525) defines what type of transformations are monitored and security constraints applied to an object when that transformation is identified. In an example, the transformation management circuitry 1545 is configured to operations to comply with potential policy updates. For example. If object with type A is transformed to into an object of type B, the new object type B may indicate a change from security policy X (e.g. platform needs to have software guard extensions (SGX)) to security policy X1 (e.g. platform needs to have SGX and TPM and multi-key total memory encryption (NMTME) and the object has to be stored in the secure device). In this case, the object B maybe flushed in case the new policy requirements are not satisfied locally. Here, the data integrity circuitry 1520 may be configured to update peers with the new object and the corresponding policy update.

The platform security monitoring circuitry 1550 is configured to implement the platform management policy 1555, the platform configuration rules 1560, and the platform configuration monitoring policy 1565. platform security monitoring circuitry 1550 is configured to monitor changes into the current platform or edge appliance that may imply security violations into the objects currently cached in the node. When a change is identified the ICN data management and caching circuitry is configured to go over all the various objects in the appliance and decide which will be flushed. In an example, different types of platform changes may be monitored, such as changes into the platform configuration-e.g. new devices update, changes on the bios or any other platform-as defined by the platform configuration rules 1560, changes into the platform utilization that may end up with potential degradation into the security-e.g. the cores or resources responsible to analyze security threads are not validating the level of required performance-as defined by the platform management policy, or changes into the software stacks that are running in the systems and that may have an interplay into the security of the system, as defined by the platform configuration monitoring policy. For instance, a check that all the required software stacks are up and running may be performed.

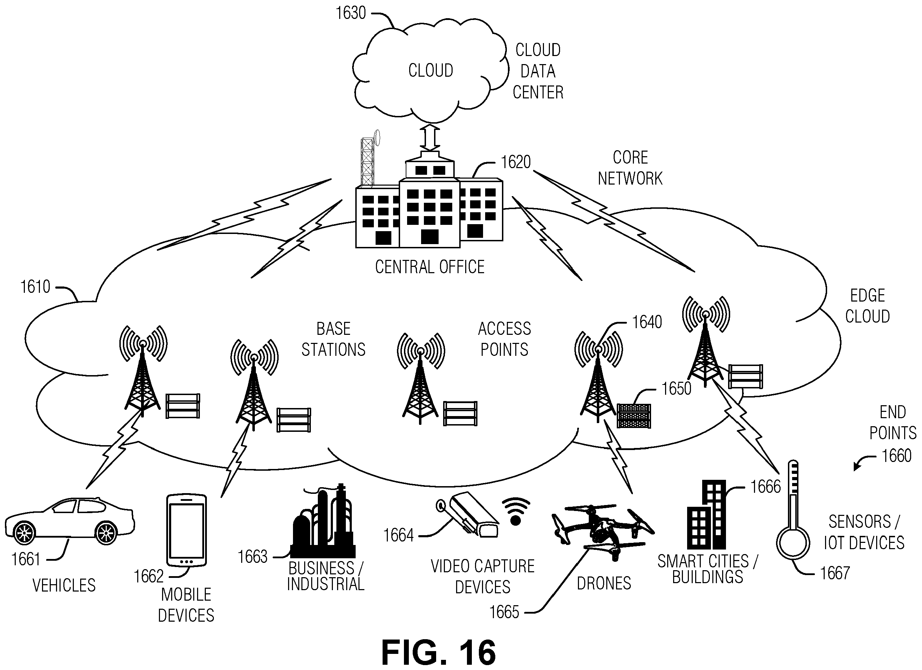

FIG. 16 is a block diagram showing an overview of a configuration for edge computing, which includes a layer of processing referred to in many of the following examples as an "edge cloud". As shown, the edge cloud 1610 is co-located at an edge location, such as an access point or base station 1640, a local processing hub 1650, or a central office 1620, and thus may include multiple entities, devices, and equipment instances. The edge cloud 1610 is located much closer to the endpoint (consumer and producer) data sources 1660 (e.g., autonomous vehicles 1661, user equipment 1662, business and industrial equipment 1663, video capture devices 1664, drones 1665, smart cities and building devices 1666, sensors and IoT devices 1667, etc.) than the cloud data center 1630. Compute, memory, and storage resources which are offered at the edges in the edge cloud 1610 are critical to providing ultra-low latency response times for services and functions used by the endpoint data sources 1660 as well as reduce network backhaul traffic from the edge cloud 1610 toward cloud data center 1630 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

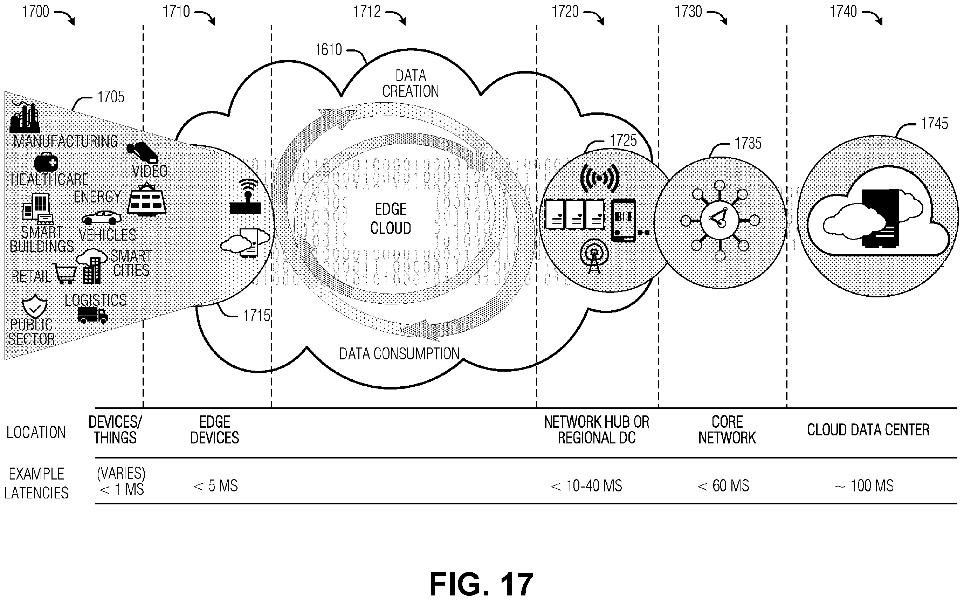

FIG. 17 illustrates operational layers among endpoints, an edge cloud, and cloud computing environments. Specifically, FIG. 17 depicts examples of computational use cases 1705, utilizing the edge cloud 1610 among multiple illustrative layers of network computing. The layers begin at an endpoint (devices and things) layer 1700, which accesses the edge cloud 1610 to conduct data creation, analysis, and data consumption activities. The edge cloud 1610 may span multiple network layers, such as an edge devices layer 1710 having gateways, on-premise servers, or network equipment (nodes 1715) located in physically proximate edge systems; a network access layer 1720, encompassing base stations, radio processing units, network hubs, regional data centers (DC), or local network equipment (equipment 1725); and any equipment, devices, or nodes located therebetween (in layer 1712, not illustrated in detail). The network communications within the edge cloud 1610 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 1700, under 5 ms at the edge devices layer 1710, to even between 10 to 40 ms when communicating with nodes at the network access layer 1720. Beyond the edge cloud 1610 are core network 1730 and cloud data center 1740 layers, each with increasing latency (e.g., between 50-60 ms at the core network layer 1730, to 100 or more ms at the cloud data center layer). As a result, operations at a core network data center 1735 or a cloud data center 1745, with latencies of at least 50 to 100 ms or more, will not be able to accomplish many time-critical functions of the use cases 1705. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 1735 or a cloud data center 1745, a central office or content data network may be considered as being located within a "near edge" layer ("near" to the cloud, having high latency values when communicating with the devices and endpoints of the use cases 1705), whereas an access point, base station, on-premise server, or network gateway may be considered as located within a "far edge" layer ("far" from the cloud, having low latency values when communicating with the devices and endpoints of the use cases 1705). It will be understood that other categorizations of a particular network layer as constituting a "close", "local", "near", "middle", or "far" edge may be based on latency, distance, number of network hops, or other measurable characteristics, as measured from a source in any of the network layers 1700-1740.

The various use cases 1705 may access resources under usage pressure from incoming streams, due to multiple services utilizing the edge cloud. To achieve results with low latency, the services executed within the edge cloud 1610 balance varying requirements in terms of (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 1610 may provide the ability to serve and respond to multiple applications of the use cases 1705 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 1610 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 1610 (network layers 1700-1740), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 1610.

As such, the edge cloud 1610 is formed from network components and functional features operated by and within edge gateway nodes, edge aggregation nodes, or other edge compute nodes among network layers 1710-1730. The edge cloud 1610 thus may be embodied as any type of network that provides edge computing or storage resources which are proximately located to radio access network (RAN) capable endpoint devices (e.g., mobile computing devices, IoT devices, smart devices, etc.), which are discussed herein. In other words, the edge cloud 1610 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage or compute capabilities. Other types and forms of network access (e.g., Wi-Fi, long-range wireless, wired networks including optical networks) may also be utilized in place of or in combination with such 3GPP carrier networks.

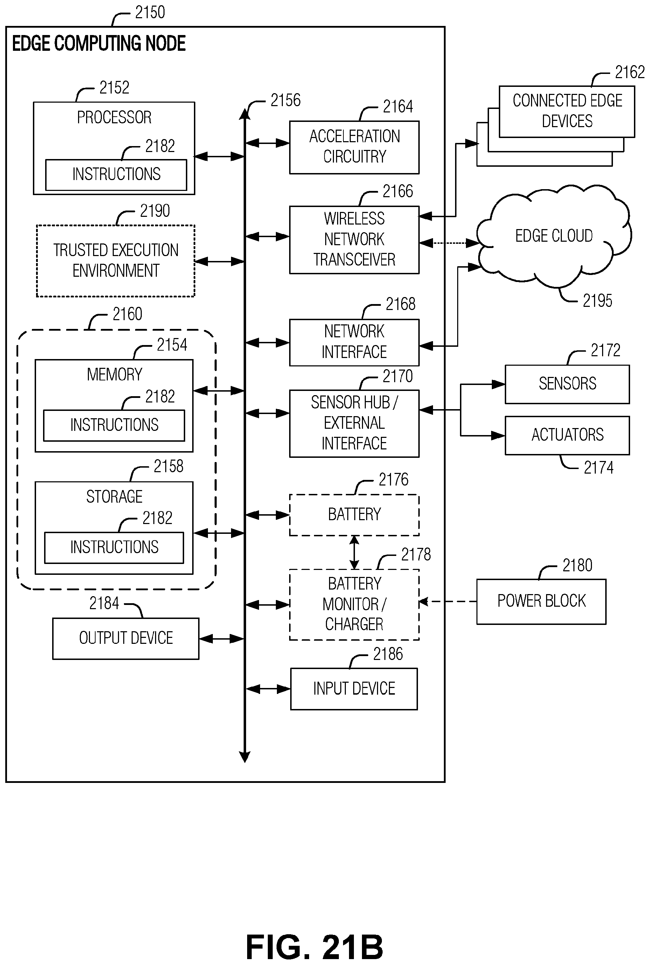

The network components of the edge cloud 1610 may be servers, multi-tenant servers, appliance computing devices, or any other type of computing devices. For example, the edge cloud 1610 may include an appliance computing device that is a self-contained electronic device including a housing, a chassis, a case or a shell. In some circumstances, the housing may be dimensioned for portability such that it can be carried by a human or shipped. Example housings may include materials that form one or more exterior surfaces that partially or fully protect contents of the appliance, in which protection may include weather protection, hazardous environment protection (e.g., EMI, vibration, extreme temperatures), or enable submergibility. Example housings may include power circuitry to provide power for stationary or portable implementations, such as AC power inputs, DC power inputs, AC/DC or DC/AC converter(s), power regulators, transformers, charging circuitry, batteries, wired inputs or wireless power inputs. Example housings or surfaces thereof may include or connect to mounting hardware to enable attachment to structures such as buildings, telecommunication structures (e.g., poles, antenna structures, etc.) or racks (e.g., server racks, blade mounts, etc.). Example housings or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface or mounted to the surface of the appliance. Example housings or surfaces thereof may support mechanical connectivity, such as propulsion hardware (e.g., wheels, propellers, etc.) or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 21B. The edge cloud 1610 may also include one or more servers or one or more multi-tenant servers. Such a server may include an operating system and implement a virtual computing environment. A virtual computing environment may include a hypervisor managing (e.g., spawning, deploying, destroying, etc.) one or more virtual machines, one or more containers, etc. Such virtual computing environments provide an execution environment in which one or more applications or other software, code or scripts may execute while being isolated from one or more other applications, software, code or scripts.

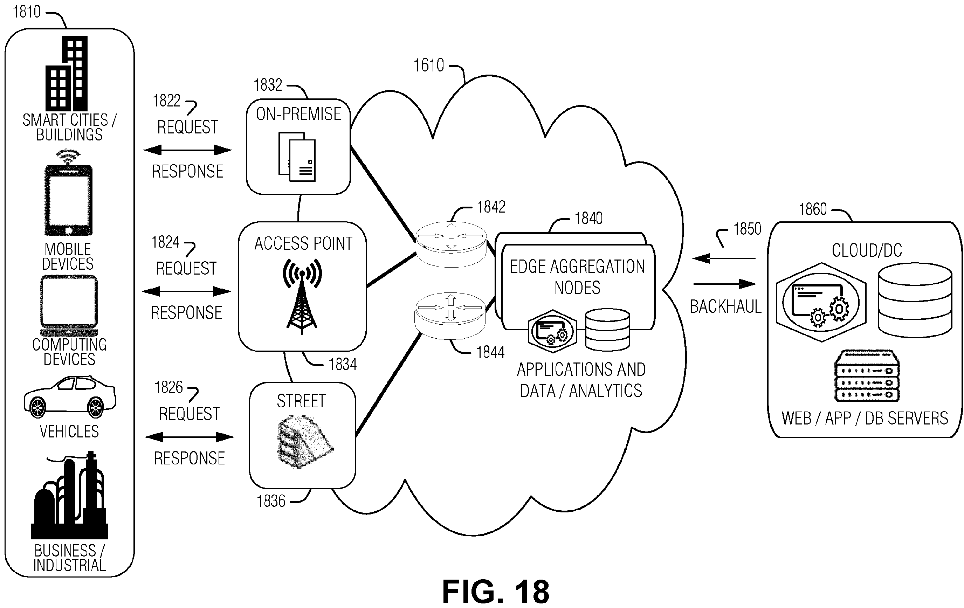

In FIG. 18, various client endpoints 1810 (in the form of mobile devices, computers, autonomous vehicles, business computing equipment, industrial processing equipment) exchange requests and responses that are specific to the type of endpoint network aggregation. For instance, client endpoints 1810 may obtain network access via a wired broadband network, by exchanging requests and responses 1822 through an on-premise network system 1832. Some client endpoints 1810, such as mobile computing devices, may obtain network access via a wireless broadband network, by exchanging requests and responses 1824 through an access point (e.g., cellular network tower) 1834. Some client endpoints 1810, such as autonomous vehicles may obtain network access for requests and responses 1826 via a wireless vehicular network through a street-located network system 1836. However, regardless of the type of network access, the TSP may deploy aggregation points 1842, 1844 within the edge cloud 1610 to aggregate traffic and requests. Thus, within the edge cloud 1610, the TSP may deploy various compute and storage resources, such as at edge aggregation nodes 1840, to provide requested content. The edge aggregation nodes 1840 and other systems of the edge cloud 1610 are connected to a cloud or data center 1860, which uses a backhaul network 1850 to fulfill higher-latency requests from a cloud/data center for websites, applications, database servers, etc. Additional or consolidated instances of the edge aggregation nodes 1840 and the aggregation points 1842, 1844, including those deployed on a single server framework, may also be present within the edge cloud 1610 or other areas of the TSP infrastructure.

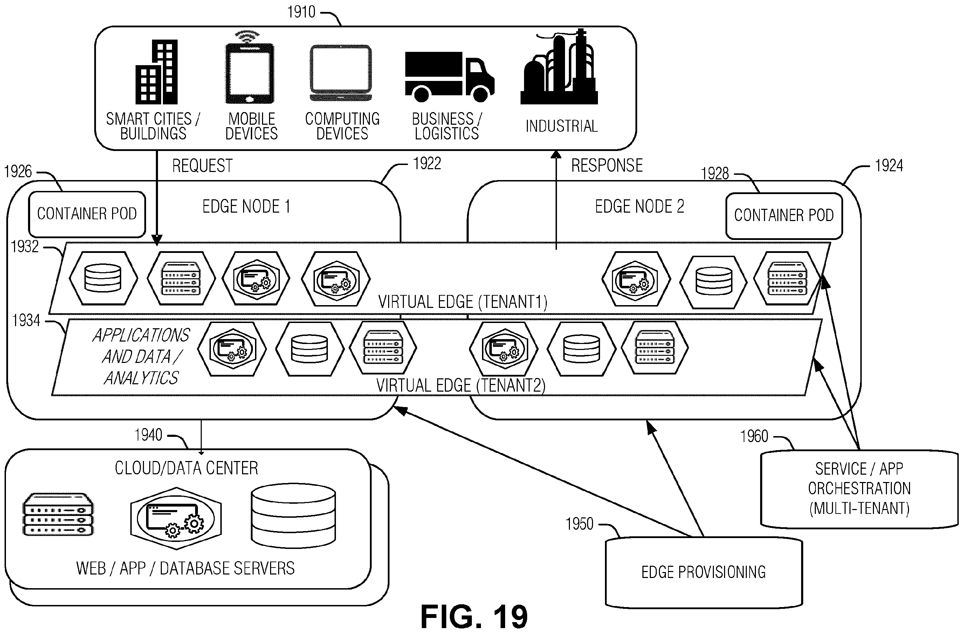

FIG. 19 illustrates deployment and orchestration for virtualized and container-based edge configurations across an edge computing system operated among multiple edge nodes and multiple tenants (e.g., users, providers) which use such edge nodes. Specifically, FIG. 19 depicts coordination of a first edge node 1922 and a second edge node 1924 in an edge computing system, to fulfill requests and responses for various client endpoints 1910 (e.g., smart cities / building systems, mobile devices, computing devices, business/logistics systems, industrial systems, etc.), which access various virtual edge instances. Here, the virtual edge instances 1932, 1934 provide edge compute capabilities and processing in an edge cloud, with access to a cloud/data center 1940 for higher-latency requests for websites, applications, database servers, etc. However, the edge cloud enables coordination of processing among multiple edge nodes for multiple tenants or entities.

In the example of FIG. 19, these virtual edge instances include: a first virtual edge 1932, offered to a first tenant (Tenant 1), which offers a first combination of edge storage, computing, and services; and a second virtual edge 1934, offering a second combination of edge storage, computing, and services. The virtual edge instances 1932, 1934 are distributed among the edge nodes 1922, 1924, and may include scenarios in which a request and response are fulfilled from the same or different edge nodes. The configuration of the edge nodes 1922, 1924 to operate in a distributed yet coordinated fashion occurs based on edge provisioning functions 1950. The functionality of the edge nodes 1922, 1924 to provide coordinated operation for applications and services, among multiple tenants, occurs based on orchestration functions 1960.

It should be understood that some of the devices in 1910 are multi-tenant devices where Tenant 1 may function within a tenant 1 `slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 1922, 1924 may operate as security feature enforcement points for local resources allocated to multiple tenants per node. Additionally, tenant runtime and application execution (e.g., in instances 1932, 1934) may serve as an enforcement point for a security feature that creates a virtual edge abstraction of resources spanning potentially multiple physical hosting platforms. Finally, the orchestration functions 1960 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to Edge Nodes. Cloud computing nodes often use containers, FaaS engines, Servlets, servers, or other computation abstraction that may be partitioned according to a DICE layering and fan-out structure to support a RoT context for each. Accordingly, the respective RoTs spanning devices 1910, 1922, and 1940 may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 19. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each edge node 1922, 1924 may implement the use of containers, such as with the use of a container "pod" 1926, 1928 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 1932, 1934 are partitioned according to the needs of each container.

With the use of container pods, a pod controller oversees the partitioning and allocation of containers and resources. The pod controller receives instructions from an orchestrator (e.g., orchestrator 1960) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 1960 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

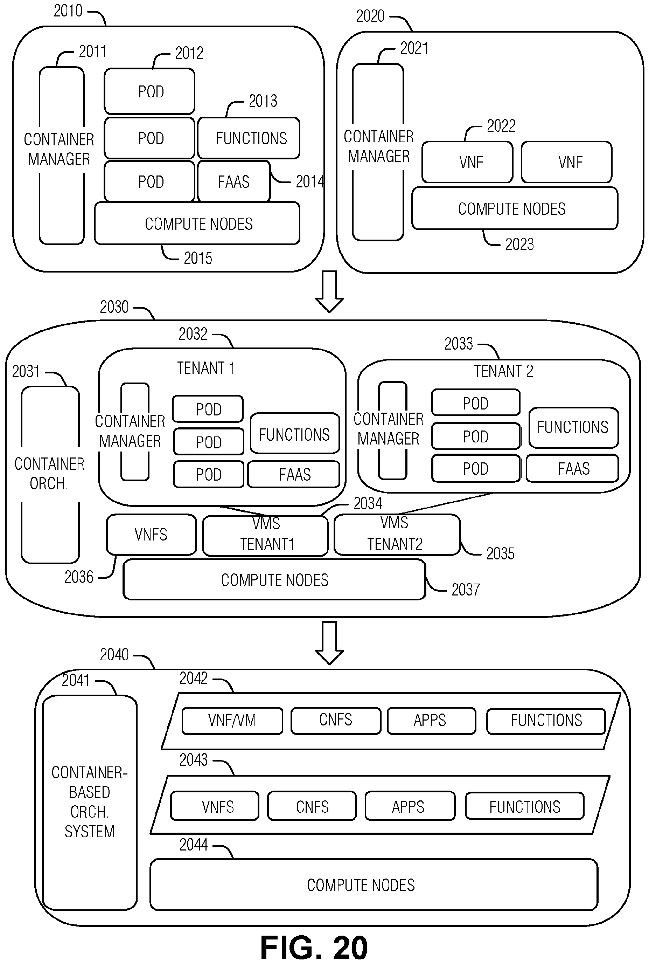

FIG. 20 illustrates additional compute arrangements deploying containers in an edge computing system. As a simplified example, system arrangements 2010, 2020 depict settings in which a pod controller (e.g., container managers 2011, 2021, and container orchestrator 2031) is adapted to launch containerized pods, functions, and functions-as-a-service instances through execution via compute nodes (2015 in arrangement 2010), or to separately execute containerized virtualized network functions through execution via compute nodes (2023 in arrangement 2020). This arrangement is adapted for use of multiple tenants in system arrangement 2030 (using compute nodes 2037), where containerized pods (e.g., pods 2012), functions (e.g., functions 2013, VNFs 2022, 2036), and functions-as-a-service instances (e.g., FaaS instance 2014) are launched within virtual machines (e.g., VMs 2034, 2035 for tenants 2032, 2033) specific to respective tenants (aside the execution of virtualized network functions). This arrangement is further adapted for use in system arrangement 2040, which provides containers 2042, 2043, or execution of the various functions, applications, and functions on compute nodes 2044, as coordinated by an container-based orchestration system 2041.

The system arrangements of depicted in FIG. 20 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of FIG. 20, the pod controller/container manager, container orchestrator, and individual nodes may provide a security enforcement point. However, tenant isolation may be orchestrated where the resources allocated to a tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves and hardware partitioning schemes may be used by edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an edge computing system. Software defined silicon (SDSi) may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

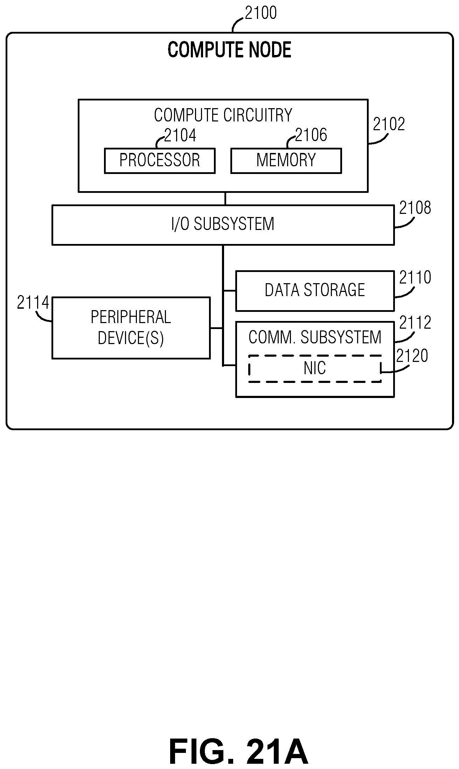

In further examples, any of the compute nodes or devices discussed with reference to the present edge computing systems and environment may be fulfilled based on the components depicted in FIGS. 21A and 21B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 21A, an edge compute node 2100 includes a compute engine (also referred to herein as "compute circuitry") 2102, an input/output (I/O) subsystem 2108, data storage 2110, a communication circuitry subsystem 2112, and, optionally, one or more peripheral devices 2114. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 2100 may be embodied as any type of engine, device, or collection of devices capable of performing various compute functions. In some examples, the compute node 2100 may be embodied as a single device such as an integrated circuit, an embedded system, a field-programmable gate array (FPGA), a system-on-a-chip (SOC), or other integrated system or device. In the illustrative example, the compute node 2100 includes or is embodied as a processor 2104 and a memory 2106. The processor 2104 may be embodied as any type of processor capable of performing the functions described herein (e.g., executing an application). For example, the processor 2104 may be embodied as a multi-core processor(s), a microcontroller, a processing unit, a specialized or special purpose processing unit, or other processor or processing/controlling circuit.

In some examples, the processor 2104 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 2104 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 2104 may work in coordination with each other to execute many types of operations and instructions within and on behalf of the compute node 2100.

The memory 2106 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 2106 may be integrated into the processor 2104. The memory 2106 may store various software and data used during operation such as one or more applications, data operated on by the application(s), libraries, and drivers.

The compute circuitry 2102 is communicatively coupled to other components of the compute node 2100 via the I/O subsystem 2108, which may be embodied as circuitry or components to facilitate input/output operations with the compute circuitry 2102 (e.g., with the processor 2104 or the main memory 2106) and other components of the compute circuitry 2102. For example, the I/O subsystem 2108 may be embodied as, or otherwise include, memory controller hubs, input/output control hubs, integrated sensor hubs, firmware devices, communication links (e.g., point-to-point links, bus links, wires, cables, light guides, printed circuit board traces, etc.), or other components and subsystems to facilitate the input/output operations. In some examples, the I/O subsystem 2108 may form a portion of a system-on-a-chip (SoC) and be incorporated, along with one or more of the processor 2104, the memory 2106, and other components of the compute circuitry 2102, into the compute circuitry 2102.

The one or more illustrative data storage devices 2110 may be embodied as any type of devices configured for short-term or long-term storage of data such as, for example, memory devices and circuits, memory cards, hard disk drives, solid-state drives, or other data storage devices. Individual data storage devices 2110 may include a system partition that stores data and firmware code for the data storage device 2110. Individual data storage devices 2110 may also include one or more operating system partitions that store data files and executables for operating systems depending on, for example, the type of compute node 2100.

The communication circuitry 2112 may be embodied as any communication circuit, device, or collection thereof, capable of enabling communications over a network between the compute circuitry 2102 and another compute device (e.g., an edge gateway of an implementing edge computing system). The communication circuitry 2112 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 2112 includes a network interface controller (NIC) 2120, which may also be referred to as a host fabric interface (HFI). The NIC 2120 may be embodied as one or more add-in-boards, daughter cards, network interface cards, controller chips, chipsets, or other devices that may be used by the compute node 2100 to connect with another compute device (e.g., an edge gateway node). In some examples, the NIC 2120 may be embodied as part of a system-on-a-chip (SoC) that includes one or more processors, or included on a multichip package that also contains one or more processors. In some examples, the NIC 2120 may include a local processor (not shown) or a local memory (not shown) that are both local to the NIC 2120. In such examples, the local processor of the NIC 2120 may be capable of performing one or more of the functions of the compute circuitry 2102 described herein. Additionally, or alternatively, in such examples, the local memory of the NIC 2120 may be integrated into one or more components of the client compute node at the board level, socket level, chip level, or other levels.

Additionally, in some examples, a respective compute node 2100 may include one or more peripheral devices 2114. Such peripheral devices 2114 may include any type of peripheral device found in a compute device or server such as audio input devices, a display, other input/output devices, interface devices, or other peripheral devices, depending on the particular type of the compute node 2100. In further examples, the compute node 2100 may be embodied by a respective edge compute node (whether a client, gateway, or aggregation node) in an edge computing system or like forms of appliances, computers, subsystems, circuitry, or other components.

In a more detailed example, FIG. 21B illustrates a block diagram of an example of components that may be present in an edge computing node 2150 for implementing the techniques (e.g., operations, processes, methods, and methodologies) described herein. This edge computing node 2150 provides a closer view of the respective components of node 2100 when implemented as or as part of a computing device (e.g., as a mobile device, a base station, server, gateway, etc.). The edge computing node 2150 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 2150, or as components otherwise incorporated within a chassis of a larger system.

The edge computing device 2150 may include processing circuitry in the form of a processor 2152, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 2152 may be a part of a system on a chip (SoC) in which the processor 2152 and other components are formed into a single integrated circuit, or a single package, such as the Edison^{™} or Galileo^{™} SoC boards from Intel Corporation, Santa Clara, California. As an example, the processor 2152 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM9-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 2152 and accompanying circuitry may be provided in a single socket form factor, multiple socket form factor, or a variety of other formats, including in limited hardware configurations or configurations that include fewer than all elements shown in FIG. 21B.

The processor 2152 may communicate with a system memory 2154 over an interconnect 2156 (e.g., a bus). Any number of memory devices may be used to provide for a given amount of system memory. As examples, the memory 2154 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 2158 may also couple to the processor 2152 via the interconnect 2156. In an example, the storage 2158 may be implemented via a solid-state disk drive (SSDD). Other devices that may be used for the storage 2158 include flash memory cards, such as Secure Digital (SD) cards, microSD cards, extreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 2158 may be on-die memory or registers associated with the processor 2152. However, in some examples, the storage 2158 may be implemented using a micro hard disk drive (HDD). Further, any number of new technologies may be used for the storage 2158 in addition to, or instead of, the technologies described, such resistance change memories, phase change memories, holographic memories, or chemical memories, among others.

The components may communicate over the interconnect 2156. The interconnect 2156 may include any number of technologies, including industry standard architecture (ISA), extended ISA (EISA), peripheral component interconnect (PCI), peripheral component interconnect extended (PCIx), PCI express (PCIe), or any number of other technologies. The interconnect 2156 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 2156 may couple the processor 2152 to a transceiver 2166, for communications with the connected edge devices 2162. The transceiver 2166 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 2162. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 2166 (or multiple transceivers) may communicate using multiple standards or radios for communications at a different range. For example, the edge computing node 2150 may communicate with close devices, e.g., within about 10 meters, using a local transceiver based on Bluetooth Low Energy (BLE), or another low power radio, to save power. More distant connected edge devices 2162, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 2166 (e.g., a radio transceiver) may be included to communicate with devices or services in a cloud (e.g., an edge cloud 2195) via local or wide area network protocols. The wireless network transceiver 2166 may be a low-power wide-area (LPWA) transceiver that follows the IEEE 802.15.4, or IEEE 802.15.4g standards, among others. The edge computing node 2150 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 2166, as described herein. For example, the transceiver 2166 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 2166 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 2168 may be included to provide a wired communication to nodes of the edge cloud 2195 or to other devices, such as the connected edge devices 2162 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 2168 may be included to enable connecting to a second network, for example, a first NIC 2168 providing communications to the cloud over Ethernet, and a second NIC 2168 providing communications to other devices over another type of network.

Given the variety of types of applicable communications from the device to another component or network, applicable communications circuitry used by the device may include or be embodied by any one or more of components 2164, 2166, 2168, or 2170. Accordingly, in various examples, applicable means for communicating (e.g., receiving, transmitting, etc.) may be embodied by such communications circuitry.

The edge computing node 2150 may include or be coupled to acceleration circuitry 2164, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 2156 may couple the processor 2152 to a sensor hub or external interface 2170 that is used to connect additional devices or subsystems. The devices may include sensors 2172, such as accelerometers, level sensors, flow sensors, optical light sensors, camera sensors, temperature sensors, global navigation system (e.g., GPS) sensors, pressure sensors, barometric pressure sensors, and the like. The hub or interface 2170 further may be used to connect the edge computing node 2150 to actuators 2174, such as power switches, valve actuators, an audible sound generator, a visual warning device, and the like.

In some optional examples, various input/output (I/O) devices may be present within or connected to, the edge computing node 2150. For example, a display or other output device 2184 may be included to show information, such as sensor readings or actuator position. An input device 2186, such as a touch screen or keypad may be included to accept input. An output device 2184 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 2150. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 2176 may power the edge computing node 2150, although, in examples in which the edge computing node 2150 is mounted in a fixed location, it may have a power supply coupled to an electrical grid, or the battery may be used as a backup or for temporary capabilities. The battery 2176 may be a lithium ion battery, or a metal-air battery, such as a zinc-air battery, an aluminum-air battery, a lithium-air battery, and the like.

A battery monitor/charger 2178 may be included in the edge computing node 2150 to track the state of charge (SoCh) of the battery 2176, if included. The battery monitor/charger 2178 may be used to monitor other parameters of the battery 2176 to provide failure predictions, such as the state of health (SoH) and the state of function (SoF) of the battery 2176. The battery monitor/charger 2178 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 2178 may communicate the information on the battery 2176 to the processor 2152 over the interconnect 2156. The battery monitor/charger 2178 may also include an analog-to-digital (ADC) converter that enables the processor 2152 to directly monitor the voltage of the battery 2176 or the current flow from the battery 2176. The battery parameters may be used to determine actions that the edge computing node 2150 may perform, such as transmission frequency, mesh network operation, sensing frequency, and the like.

A power block 2180, or other power supply coupled to a grid, may be coupled with the battery monitor/charger 2178 to charge the battery 2176. In some examples, the power block 2180 may be replaced with a wireless power receiver to obtain the power wirelessly, for example, through a loop antenna in the edge computing node 2150. A wireless battery charging circuit, such as an LTC4020 chip from Linear Technologies of Milpitas, California, among others, may be included in the battery monitor/charger 2178. The specific charging circuits may be selected based on the size of the battery 2176, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 2158 may include instructions 2182 in the form of software, firmware, or hardware commands to implement the techniques described herein. Although such instructions 2182 are shown as code blocks included in the memory 2154 and the storage 2158, it may be understood that any of the code blocks may be replaced with hardwired circuits, for example, built into an application specific integrated circuit (ASIC).

In an example, the instructions 2182 provided via the memory 2154, the storage 2158, or the processor 2152 may be embodied as a non-transitory, machine-readable medium 2160 including code to direct the processor 2152 to perform electronic operations in the edge computing node 2150. The processor 2152 may access the non-transitory, machine-readable medium 2160 over the interconnect 2156. For instance, the non-transitory, machine-readable medium 2160 may be embodied by devices described for the storage 2158 or may include specific storage units such as optical disks, flash drives, or any number of other hardware devices. The non-transitory, machine-readable medium 2160 may include instructions to direct the processor 2152 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 2182 on the processor 2152 (separately, or in combination with the instructions 2182 of the machine readable medium 2160) may configure execution or operation of a trusted execution environment (TEE) 2190. In an example, the TEE 2190 operates as a protected area accessible to the processor 2152 for secure execution of instructions and secure access to data. Various implementations of the TEE 2190, and an accompanying secure area in the processor 2152 or the memory 2154 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 2150 through the TEE 2190 and the processor 2152.

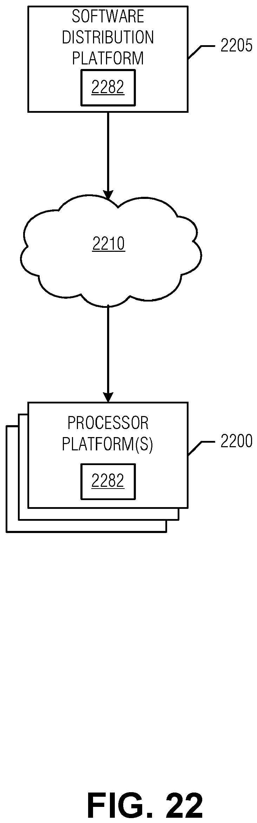

FIG 22 illustrates an example software distribution platform 2205to distribute software, such as the example computer readable instructions 2282 of FIG. 22, to one or more devices, such as example processor platform(s) 2200 or connected edge devices. The example software distribution platform 2205 may be implemented by any computer server, data facility, cloud service, etc., capable of storing and transmitting software to other computing devices (e.g., third parties, or connected edge devices). Example connected edge devices may be customers, clients, managing devices (e.g., servers), third parties (e.g., customers of an entity owning or operating the software distribution platform 2205). Example connected edge devices may operate in commercial or home automation environments. In some examples, a third party is a developer, a seller, or a licensor of software such as the example computer readable instructions 2282 of FIG. 22. The third parties may be consumers, users, retailers, OEMs, etc. that purchase or license the software for use or re-sale or sub-licensing. In some examples, distributed software causes display of one or more user interfaces (UIs) or graphical user interfaces (GUIs) to identify the one or more devices (e.g., connected edge devices) geographically or logically separated from each other (e.g., physically separated IoT devices chartered with the responsibility of water distribution control (e.g., pumps), electricity distribution control (e.g., relays), etc.).

In the illustrated example of FIG. 22, the software distribution platform 2205 includes one or more servers and one or more storage devices. The storage devices store the computer readable instructions 2282, which may correspond to the example computer readable instructions illustrated in the figures and described herein. The one or more servers of the example software distribution platform 2205 are in communication with a network 2210, which may correspond to any one or more of the Internet or any of the example networks described herein. In some examples, the one or more servers are responsive to requests to transmit the software to a requesting party as part of a commercial transaction. Payment for the delivery, sale or license of the software may be handled by the one or more servers of the software distribution platform or via a third-party payment entity. The servers enable purchasers or licensors to download the computer readable instructions 2282 from the software distribution platform 2205. For example, the software, which may correspond to the example computer readable instructions described herein, may be downloaded to the example processor platform(s) 2200 (e.g., example connected edge devices), which are to execute the computer readable instructions 2282 to implement the technique. In some examples, one or more servers of the software distribution platform 2205 are communicatively connected to one or more security domains or security devices through which requests and transmissions of the example computer readable instructions 2282 must pass. In some examples, one or more servers of the software distribution platform 2205 periodically offer, transmit, or force updates to the software (e.g., the example computer readable instructions 2282 of FIG. 22) to ensure improvements, patches, updates, etc. are distributed and applied to the software at the end user devices.

In the illustrated example of FIG. 22, the computer readable instructions 2282 are stored on storage devices of the software distribution platform 2205 in a particular format. A format of computer readable instructions includes, but is not limited to a particular code language (e.g., Java, JavaScript, Python, C, C#, SQL, HTML, etc.), or a particular code state (e.g., uncompiled code (e.g., ASCII), interpreted code, linked code, executable code (e.g., a binary), etc.). In some examples, the computer readable instructions 2282 stored in the software distribution platform 2205 are in a first format when transmitted to the example processor platform(s) 2200. In some examples, the first format is an executable binary in which particular types of the processor platform(s) 2200 can execute. However, in some examples, the first format is uncompiled code that requires one or more preparation tasks to transform the first format to a second format to enable execution on the example processor platform(s) 2200. For instance, the receiving processor platform(s) 2200 may need to compile the computer readable instructions 2282 in the first format to generate executable code in a second format that is capable of being executed on the processor platform(s) 2200. In still other examples, the first format is interpreted code that, upon reaching the processor platform(s) 2200, is interpreted by an interpreter to facilitate execution of instructions.

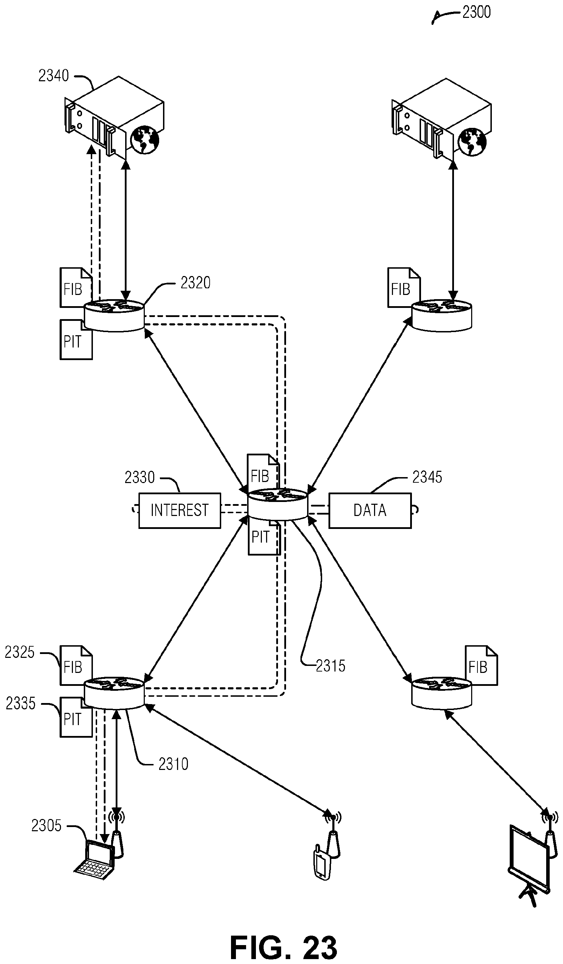

FIG. 23 illustrates an example information centric network (ICN), according to an embodiment. ICNs operate differently than traditional host-based (e.g., address-based) communication networks. ICN is an umbrella term for a networking paradigm in which information and/or functions themselves are named and requested from the network instead of hosts (e.g., machines that provide information). In a host-based networking paradigm, such as used in the Internet protocol (IP), a device locates a host and requests content from the host. The network understands how to route (e.g., direct) packets based on the address specified in the packet. In contrast, ICN does not include a request for a particular machine and does not use addresses. Instead, to get content, a device 2305 (e.g., subscriber) requests named content from the network itself. The content request may be called an *interest* and transmitted via an *interest packet* 2330. As the interest packet traverses network devices (e.g., network elements, routers, switches, hubs, etc.)-such as network elements 2310, 2315, and 2320-a record of the interest is kept, for example, in a pending interest table (PIT) at each network element. Thus, network element 2310 maintains an entry in its PIT 2335 for the interest packet 2330, network element 2315 maintains the entry in its PIT, and network element 2320 maintains the entry in its PIT.

When a device, such as publisher 2340, that has content matching the name in the interest packet 2330 is encountered, that device 2340 may send a data packet 2345 in response to the interest packet 2330. Typically, the data packet 2345 is tracked back through the network to the source (e.g., device 2305) by following the traces of the interest packet 2330 left in the network element PITs. Thus, the PIT 2335 at each network element establishes a trail back to the subscriber 2305 for the data packet 2345 to follow.

Matching the named data in an ICN may follow several strategies. Generally, the data is named hierarchically, such as with a universal resource identifier (URI). For example, a video may be named www.somedomain.com or videos or v8675309. Here, the hierarchy may be seen as the publisher, "www.somedomain.com," a sub-category, "videos," and the canonical identification "v8675309." As an interest 2330 traverses the ICN, ICN network elements will generally attempt to match the name to a greatest degree. Thus, if an ICN element has a cached item or route for both "www.somedomain.com or videos" and "www.somedomain.com or videos or v8675309," the ICN element will match the later for an interest packet 2330 specifying "www.somedomain.com or videos or v8675309." In an example, an expression may be used in matching by the ICN device. For example, the interest packet may specify "www.somedomain.com or videos or v8675*" where `*' is a wildcard. Thus, any cached item or route that includes the data other than the wildcard will be matched.

Item matching involves matching the interest 2330 to data cached in the ICN element. Thus, for example, if the data 2345 named in the interest 2330 is cached in network element 2315, then the network element 2315 will return the data 2345 to the subscriber 2305 via the network element 2310. However, if the data 2345 is not cached at network element 2315, the network element 2315 routes the interest 2330 on (e.g., to network element 2320). To facilitate routing, the network elements may use a forwarding information base 2325 (FIB) to match named data to an interface (e.g., physical port) for the route. Thus, the FIB 2325 operates much like a routing table on a traditional network device.

In an example, additional metadata may be attached to the interest packet 2330, the cached data, or the route (e.g., in the FIB 2325), to provide an additional level of matching. For example, the data name may be specified as "www.somedomain.com or videos or v8675309," but also include a version number-or timestamp, time range, endorsement, etc. In this example, the interest packet 2330 may specify the desired name, the version number, or the version range. The matching may then locate routes or cached data matching the name and perform the additional comparison of metadata or the like to arrive at an ultimate decision as to whether data or a route matches the interest packet 2330 for respectively responding to the interest packet 2330 with the data packet 2345 or forwarding the interest packet 2330.

ICN has advantages over host-based networking because the data segments are individually named. This enables aggressive caching throughout the network as a network element may provide a data packet 2330 in response to an interest 2330 as easily as an original author 2340. Accordingly, it is less likely that the same segment of the network will transmit duplicates of the same data requested by different devices.

Fine grained encryption is another feature of many ICN networks. A typical data packet 2345 includes a name for the data that matches the name in the interest packet 2330. Further, the data packet 2345 includes the requested data and may include additional information to filter similarly named data (e.g., by creation time, expiration time, version, etc.). To address malicious entities providing false information under the same name, the data packet 2345 may also encrypt its contents with a publisher key or provide a cryptographic hash of the data and the name. Thus, knowing the key (e.g., from a certificate of an expected publisher 2340) enables the recipient to ascertain whether the data is from that publisher 2340. This technique also facilitates the aggressive caching of the data packets 2345 throughout the network because each data packet 2345 is self-contained and secure. In contrast, many host-based networks rely on encrypting a connection between two hosts to secure communications. This may increase latencies while connections are being established and prevents data caching by hiding the data from the network elements.

Example ICN networks include content centric networking (CCN), as specified in the Internet Engineering Task Force (IETF) draft specifications for CCNx 0.x and CCN 1.x, and named data networking (NDN), as specified in the NDN technical report DND-0001.

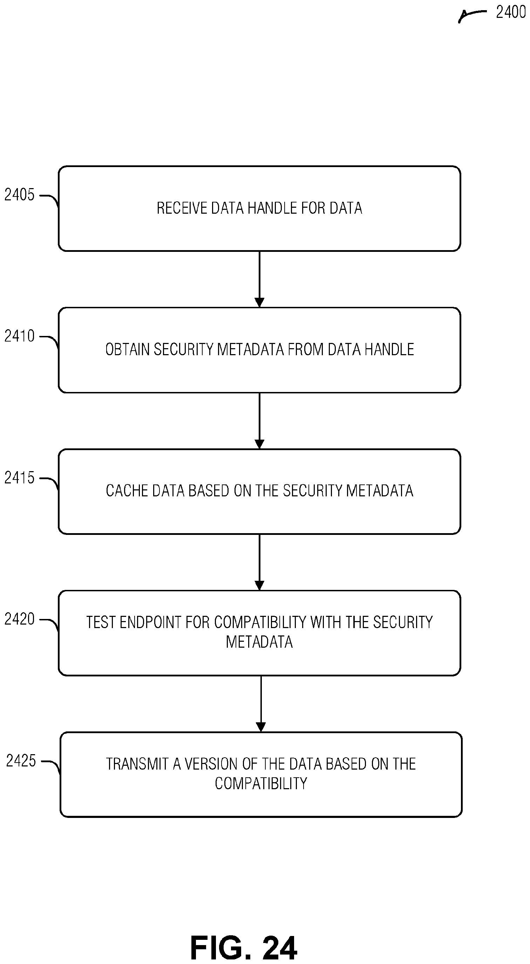

FIG. 24 illustrates a flow diagram of an example of a method 2400 for ICN tunneling, according to an embodiment. The operations of the method 2400 are performed by computational hardware, such as that described above or below (e.g., processing circuitry).

At operation 2405, a data handle for data is received at an ICN router. Here, the data handle includes an indication of security metadata. In an example, the security metadata includes a policy for data security or integrity with respect to one or more target hardware or software platforms.

At operation 2410, the security metadata is obtained based on the data handle. In an example, obtaining the security metadata includes extracting the security metadata from the data handle. In an example, obtaining the security metadata includes processing a portion of the data handle using a local function to generate the security metadata.

In an example, obtaining the security metadata includes extracting an index from the data handle and retrieving the security metadata from a local repository based on the index. In an example, the ICN router includes hardware assisted lookup circuitry (HALO) to perform hash based lookups. Here, retrieving the security metadata includes using a HALO to lookup the security metadata in the local repository. In an example, the ICN router uses the HALO, or a second HALO, to perform lookups in a content store, pending interest table, or forwarding interest base of the ICN router.

At operation 2415, the data is cached based on the security metadata. In an example, caching the data based on the security metadata includes collecting ICN router platform information, retrieving a policy directive from the policy based on the ICN router platform information, and applying the policy directive. In an example, the policy directive is at least one of no-cache, encrypt, or compress. In an example, a second policy directive establishes one of several different levels of encryption based on the ICN router platform information.

At operation 2420, an ICN node at an interface of the ICN router is tested for compatibility with the security metadata. In an example, testing the ICN node includes transmitting the data handle to the ICN node and receiving a response from the ICN node. Here, the ICN node tests whether the security metadata is in one or more sets installed at the ICN node.

In an example, the method 2400 includes the operations of receiving a set definition at the ICN router and using the set definition to respond to tests from other ICN nodes about compatibility with other security metadata. In an example, the set corresponds to a virtual private network. Here, each ICN node with the set definition is a participant in the virtual private network.

At operation 2425, a version of the data is transmitted to the ICN node based on the compatibility of the ICN node with the security metadata. In an example, when the ICN node is not compatible with the security metadata, the version of the data is the data handle. In an example, when the compatibility of the ICN node with the security metadata indicates that the data must be encrypted, the version of the data is an encrypted form of the data.

In an example, the operations of the method 2400 include receiving an interest packet from a second ICN node connectable to the ICN router through the ICN node. Here the interest packet indicates compatibility with the security metadata and an encryption protocol to use. Then, the data is encrypted in accordance with the encryption protocol to create encrypted data. The encrypted data may then be transmitted in a data packet to the ICN node for delivery to the second ICN node.

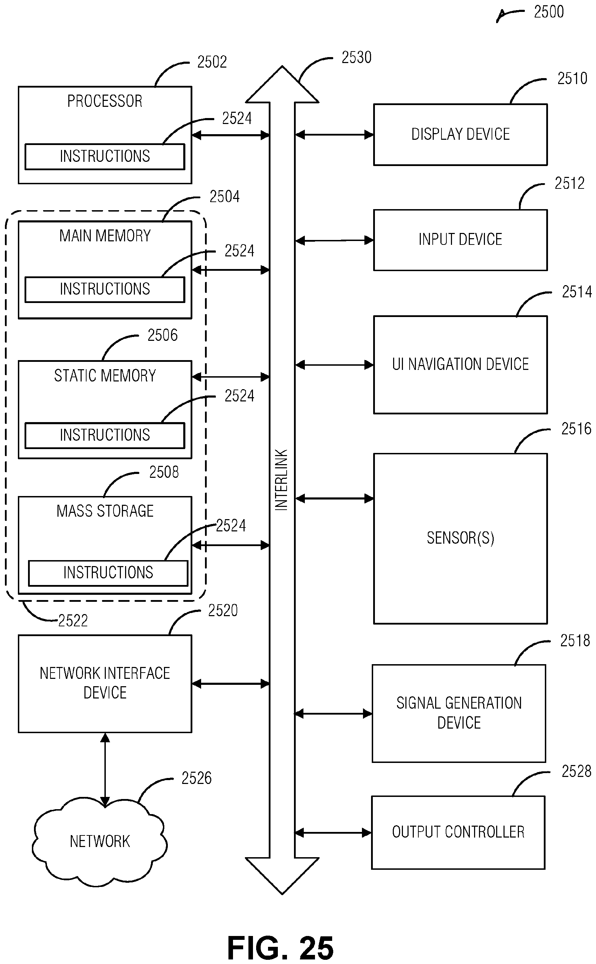

FIG. 25 illustrates a block diagram of an example machine 2500 upon which any one or more of the techniques (e.g., methodologies) discussed herein may perform. Examples, as described herein, may include, or may operate by, logic or a number of components, or mechanisms in the machine 2500. Circuitry (e.g., processing circuitry) is a collection of circuits implemented in tangible entities of the machine 2500 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 2500 follow.

In alternative embodiments, the machine 2500 may operate as a standalone device or may be connected (e.g., networked) to other machines. In a networked deployment, the machine 2500 may operate in the capacity of a server machine, a client machine, or both in server-client network environments. In an example, the machine 2500 may act as a peer machine in peer-to-peer (P2P) (or other distributed) network environment. The machine 2500 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 2500 may include a hardware processor 2502 (e.g., a central processing unit (CPU), a graphics processing unit (GPU), a hardware processor core, or any combination thereof), a main memory 2504, a static memory (e.g., memory or storage for firmware, microcode, a basic-input-output (BIOS), unified extensible firmware interface (UEFI), etc.) 2506, and mass storage 2508 (e.g., hard drives, tape drives, flash storage, or other block devices) some or all of which may communicate with each other via an interlink (e.g., bus) 2530. The machine 2500 may further include a display unit 2510, an alphanumeric input device 2512 (e.g., a keyboard), and a user interface (UI) navigation device 2514 (e.g., a mouse). In an example, the display unit 2510, input device 2512 and UI navigation device 2514 may be a touch screen display. The machine 2500 may additionally include a storage device (e.g., drive unit) 2508, a signal generation device 2518 (e.g., a speaker), a network interface device 2520, and one or more sensors 2516, such as a global positioning system (GPS) sensor, compass, accelerometer, or other sensor. The machine 2500 may include an output controller 2528, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 2502, the main memory 2504, the static memory 2506, or the mass storage 2508 may be, or include, a machine readable medium 2522 on which is stored one or more sets of data structures or instructions 2524 (e.g., software) embodying or utilized by any one or more of the techniques or functions described herein. The instructions 2524 may also reside, completely or at least partially, within any of registers of the processor 2502, the main memory 2504, the static memory 2506, or the mass storage 2508 during execution thereof by the machine 2500. In an example, one or any combination of the hardware processor 2502, the main memory 2504, the static memory 2506, or the mass storage 2508 may constitute the machine readable media 2522. While the machine readable medium 2522 is illustrated as a single medium, the term "machine readable medium" may include a single medium or multiple media (e.g., a centralized or distributed database, or associated caches and servers) configured to store the one or more instructions 2524.

The term "machine readable medium" may include any medium that is capable of storing, encoding, or carrying instructions for execution by the machine 2500 and that cause the machine 2500 to perform any one or more of the techniques of the present disclosure, or that is capable of storing, encoding or carrying data structures used by or associated with such instructions. Non-limiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 2522 may be representative of the instructions 2524, such as instructions 2524 themselves or a format from which the instructions 2524 may be derived. This format from which the instructions 2524 may be derived may include source code, encoded instructions (e.g., in compressed or encrypted form), packaged instructions (e.g., split into multiple packages), or the like. The information representative of the instructions 2524 in the machine readable medium 2522 may be processed by processing circuitry into the instructions to implement any of the operations discussed herein. For example, deriving the instructions 2524 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 2524.

In an example, the derivation of the instructions 2524 may include assembly, compilation, or interpretation of the information (e.g., by the processing circuitry) to create the instructions 2524 from some intermediate or preprocessed format provided by the machine readable medium 2522. The information, when provided in multiple parts, may be combined, unpacked, and modified to create the instructions 2524. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 2524 may be further transmitted or received over a communications network 2526 using a transmission medium via the network interface device 2520 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), LoRa/LoRaWAN, or satellite communication networks, mobile telephone networks (e.g., cellular networks such as those complying with 3G, 4G LTE/LTE-A, or 5G standards), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}, IEEE 802.15.4 family of standards, peer-to-peer (P2P) networks, among others. In an example, the network interface device 2520 may include one or more physical jacks (e.g., Ethernet, coaxial, or phone jacks) or one or more antennas to connect to the communications network 2526. In an example, the network interface device 2520 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 2500, and includes digital or analog communications signals or other intangible medium to facilitate communication of such software. A transmission medium is a machine readable medium.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims.

## Claims

1. A method for Information Centric Networking, ICN, tunneling, the method comprising:
receiving, at an ICN router (120), a data handle for data, the data handle including an indication of security metadata;
obtaining the security metadata based on the data handle;
caching the data based on the security metadata;
testing an ICN node (130) at an interface of the ICN router (120) for compatibility with the security metadata; and
transmitting a version of the data to the ICN node (130) based on the compatibility of the ICN node (130) with the security metadata,
wherein, when the ICN node (130) is not compatible with the security metadata, the version of the data is the data handle, and
when the compatibility of the ICN node (130) with the security metadata indicates that the data must be encrypted, the version of the data is an encrypted form of the data.

2. The method of claim 1,
wherein the security metadata includes a policy for data security or integrity with respect to one or more target hardware or software platforms.

3. The method of claim 2,
wherein caching the data based on the security metadata includes:
collecting ICN router platform information;
retrieving a policy directive from the policy based on the ICN router platform information; and
applying the policy directive.

4. The method of any of claims 1-3,
wherein testing the ICN node (130) includes:
transmitting the data handle to the ICN node (130); and
receiving a response from the ICN node (130), the ICN node (130) testing whether the security metadata is in one or more access sets installed at the ICN node (130).

5. The method of claim 4, comprising:
receiving an access set definition at the ICN router (120); and
using the access set definition to respond to tests from other ICN nodes (130) about compatibility with other security metadata.

6. The method of claim 5,
wherein the access set definition corresponds to a virtual private network, and wherein each ICN node (130) with the set definition is a participant in the virtual private network.

7. The method of any of claims 1-6,
wherein the ICN node (130) was not compatible with the security metadata, and wherein the version of the data is the data handle.

8. The method of claim 7, comprising:
receiving an interest packet from a second ICN node (135) connectable to the ICN router (120) through the ICN node (130), the interest packet indicating compatibility with the security metadata and an encryption protocol to use;
encrypting the data in accordance with the encryption protocol to create encrypted data; and
transmitting the encrypted data in a data packet to the ICN node (130) for delivery to the second ICN node (135).

9. The method of any of claims 1-8,
wherein the compatibility of the ICN node (130) with the security metadata indicates that the data must be encrypted, and wherein the version of the data is an encrypted form of the data.

10. The method of any of claims 1-9,
wherein obtaining the security metadata includes processing a portion of the data handle using a local function to generate the security metadata.

11. The method of any of claims 1-10,
wherein obtaining the security metadata includes:
extracting an index from the data handle; and
retrieving the security metadata from a local repository based on the index.

12. The method of claim 11,
wherein the ICN router (120) includes hardware assisted lookup circuitry, HALO, to perform hash based lookups, and wherein retrieving the security metadata includes using a HALO to lookup the security metadata in the local repository.

13. The method of claim 12,
wherein the ICN router (120) uses the HALO, or a second HALO, to perform lookups in a content store, pending interest table, or forwarding interest base of the ICN router (120).

14. At least one machine readable medium including instructions that, when executed by processing circuitry, cause the processing circuitry to perform any method of claims 1-13.

15. A system comprising means to perform any method of claims 1-13.

## Patentansprüche

1. Verfahren zum informationszentrischen Netzwerktunneln, ICN-Tunneln, wobei das Verfahren umfasst:
Empfangen eines Daten-Handles für Daten an einem ICN-Router (120), wobei das Daten-Handle eine Angabe von Sicherheitsmetadaten beinhaltet;
Erhalten der Sicherheitsmetadaten basierend auf dem Daten-Handle;
Zwischenspeichern der Daten basierend auf den Sicherheitsmetadaten;
Testen eines ICN-Knotens (130) an einer Schnittstelle des ICN-Routers (120) auf Kompatibilität mit den Sicherheitsmetadaten; und
Übertragen einer Version der Daten an den ICN-Knoten (130) basierend auf der Kompatibilität des ICN-Knotens (130) mit den Sicherheitsmetadaten,
wobei, wenn der ICN-Knoten (130) nicht mit den Sicherheitsmetadaten kompatibel ist, die Version der Daten das Daten-Handle ist, und
wenn die Kompatibilität des ICN-Knotens (130) mit den Sicherheitsmetadaten angibt, dass die Daten verschlüsselt werden müssen, die Version der Daten eine verschlüsselte Form der Daten ist.

2. Verfahren nach Anspruch 1,
wobei die Sicherheitsmetadaten eine Richtlinie für Datensicherheit oder -integrität in Bezug auf eine oder mehrere Zielhardware- oder -softwareplattformen beinhalten.

3. Verfahren nach Anspruch 2,
wobei das Zwischenspeichern der Daten basierend auf den Sicherheitsmetadaten beinhaltet:
Sammeln von ICN-Router-Plattforminformationen;
Abrufen einer Richtlinienanweisung aus der Richtlinie basierend auf den ICN-Router-Plattforminformationen; und
Anwenden der Richtlinienanweisung.

4. Verfahren nach einem der Ansprüche 1 bis 3,
wobei das Testen des ICN-Knotens (130) beinhaltet:
Übertragen des Daten-Handles an den ICN-Knoten (130); und
Empfangen einer Antwort von dem ICN-Knoten (130), wobei der ICN-Knoten (130) testet, ob sich die Sicherheitsmetadaten in einem oder mehreren Zugriffssätzen befinden, die an dem ICN-Knoten (130) installiert sind.

5. Verfahren nach Anspruch 4, das umfasst:
Empfangen einer Zugriffssatzdefinition an dem ICN-Router (120); und
Verwenden der Zugriffssatzdefinition, um auf Tests von anderen ICN-Knoten (130) bezüglich der Kompatibilität mit anderen Sicherheitsmetadaten zu antworten.

6. Verfahren nach Anspruch 5,
wobei die Zugriffssatzdefinition einem virtuellen privaten Netzwerk entspricht, und wobei jeder ICN-Knoten (130) mit der Satzdefinition ein Teilnehmer in dem virtuellen privaten Netzwerk ist.

7. Verfahren nach einem der Ansprüche 1 bis 6,
wobei der ICN-Knoten (130) nicht mit den Sicherheitsmetadaten kompatibel war und wobei die Version der Daten das Daten-Handle ist.

8. Verfahren nach Anspruch 7, das umfasst:
Empfangen eines Interessenpakets von einem zweiten ICN-Knoten (135), der über den ICN-Knoten (130) mit dem ICN-Router (120) verbunden werden kann, wobei das Interessenpaket die Kompatibilität mit den Sicherheitsmetadaten und ein zu verwendendes Verschlüsselungsprotokoll angibt;
Verschlüsseln der Daten in Übereinstimmung mit dem Verschlüsselungsprotokoll, um verschlüsselte Daten zu erstellen; und
Übertragen der verschlüsselten Daten in einem Datenpaket an den ICN-Knoten (130) zur Lieferung an den zweiten ICN-Knoten (135).

9. Verfahren nach einem der Ansprüche 1 bis 8,
wobei die Kompatibilität des ICN-Knotens (130) mit den Sicherheitsmetadaten angibt, dass die Daten verschlüsselt werden müssen, und wobei die Version der Daten eine verschlüsselte Form der Daten ist.

10. Verfahren nach einem der Ansprüche 1 bis 9,
wobei das Erhalten der Sicherheitsmetadaten das Verarbeiten eines Teils des Daten-Handles unter Verwendung einer lokalen Funktion beinhaltet, um die Sicherheitsmetadaten zu erzeugen.

11. Verfahren nach einem der Ansprüche 1 bis 10,
wobei das Erhalten der Sicherheitsmetadaten beinhaltet:
Extrahieren eines Indexes aus dem Daten-Handle; und
Abrufen der Sicherheitsmetadaten aus einem lokalen Repository basierend auf dem Index.

12. Verfahren nach Anspruch 11,
wobei der ICN-Router (120) eine hardwareunterstützten Nachschlagschaltung, HALO, beinhaltet, um Hash-basierte Nachschlagvorgänge durchzuführen, und wobei das Abrufen der Sicherheitsmetadaten die Verwendung einer HALO beinhaltet, um die Sicherheitsmetadaten in dem lokalen Repository nachzuschlagen.

13. Verfahren nach Anspruch 12,
wobei der ICN-Router (120) die HALO oder eine zweite HALO verwendet, um Nachschlagvorgänge in einem Inhaltsspeicher, einer anhängigen Interessentabelle oder einer Weiterleitungsinteressenbasis des ICN-Routers (120) durchzuführen.

14. Mindestens ein maschinenlesbares Medium, das Anweisungen beinhaltet, die, wenn sie durch eine Verarbeitungsschaltung ausgeführt werden, die Verarbeitungsschaltung veranlassen, ein Verfahren nach den Ansprüchen 1 bis 13 durchzuführen.

15. System, das Mittel zum Durchführen eines Verfahrens nach den Ansprüchen 1 bis 13 umfasst.

## Revendications

1. Procédé de tunnellisation de mise en réseau centrée sur l'information, ICN, le procédé comprenant les étapes suivantes :
recevoir, au niveau d'un routeur ICN (120), une structuration de données pour des données, la structuration de données comprenant une indication de métadonnées de sécurité ;
obtenir les métadonnées de sécurité sur la base de la structuration de données ;
mettre en cache les données sur la base des métadonnées de sécurité ;
tester un noeud ICN (130) au niveau d'une interface du routeur ICN (120) pour vérifier la compatibilité avec les métadonnées de sécurité ; et
transmettre une version des données au noeud ICN (130) sur la base de la compatibilité du noeud ICN (130) avec les métadonnées de sécurité,
dans lequel, lorsque le noeud ICN (130) n'est pas compatible avec les métadonnées de sécurité, la version des données est la structuration de données, et
lorsque la compatibilité du noeud ICN (130) avec les métadonnées de sécurité indique que les données doivent être cryptées, la version des données est une forme cryptée des données.

2. Procédé selon la revendication 1,
dans lequel les métadonnées de sécurité comprennent une politique de sécurité ou d'intégrité des données concernant une ou plusieurs plates-formes matérielles ou logicielles cibles.

3. Procédé selon la revendication 2,
dans lequel la mise en cache des données sur la base des métadonnées de sécurité comprend les étapes suivantes :
collecter des informations relatives à la plate-forme du routeur ICN ;
extraire une directive de politique de la politique basée sur les informations relatives à la plate-forme du routeur ICN ; et
appliquer la directive de politique.

4. Procédé selon l'une quelconque des revendications 1 à 3,
dans lequel le test du noeud ICN (130) comprend les étapes suivantes :
transmettre la structuration de données au noeud ICN (130) ; et
recevoir une réponse du noeud ICN (130), le noeud ICN (130) vérifiant si les métadonnées de sécurité se trouvent dans un ou plusieurs ensembles d'accès installés au niveau du noeud ICN (130).

5. Procédé selon la revendication 4, comprenant les étapes suivantes :
recevoir une définition d'ensemble d'accès au niveau du routeur ICN (120) ; et
utiliser la définition de l'ensemble d'accès pour répondre aux tests provenant d'autres noeuds ICN (130) concernant la compatibilité avec d'autres métadonnées de sécurité.

6. Procédé selon la revendication 5,
dans lequel la définition de l'ensemble d'accès correspond à un réseau privé virtuel, et dans lequel chaque noeud ICN (130) avec la définition de l'ensemble est un participant dans le réseau privé virtuel.

7. Procédé selon l'une quelconque des revendications 1 à 6,
dans lequel le noeud ICN (130) n'était pas compatible avec les métadonnées de sécurité, et dans lequel la version des données est la structuration de données.

8. Procédé selon la revendication 7, comprenant les étapes suivantes :
recevoir un paquet d'intérêt d'un deuxième noeud ICN (135) pouvant être connecté au routeur ICN (120) par l'intermédiaire du noeud ICN (130), le paquet d'intérêt indiquant la compatibilité avec les métadonnées de sécurité et un protocole de cryptage à utiliser ;
chiffrer les données conformément au protocole de chiffrement pour créer des données chiffrées ; et
transmettre les données chiffrées dans un paquet de données au noeud ICN (130) pour livraison au deuxième noeud ICN (135).

9. Procédé selon l'une quelconque des revendications 1 à 8,
dans lequel la compatibilité du noeud ICN (130) avec les métadonnées de sécurité indique que les données doivent être cryptées, et dans lequel la version des données est une forme cryptée des données.

10. Procédé selon l'une quelconque des revendications 1 à 9,
dans lequel l'obtention des métadonnées de sécurité comprend le traitement d'une partie de la structuration de données utilisant une fonction locale pour générer les métadonnées de sécurité.

11. Procédé selon l'une quelconque des revendications 1 à 10,
dans lequel l'obtention des métadonnées de sécurité comprend les étapes suivantes :
extraire un index de la structuration de données ; et
extraire les métadonnées de sécurité d'un répertoire local sur la base de l'index.

12. Procédé selon la revendication 11,
dans lequel le routeur ICN (120) comprend un circuit de recherche assisté par matériel, HALO, pour effectuer des recherches basées sur le hachage, et dans lequel la récupération des métadonnées de sécurité comprend d'utiliser un HALO pour rechercher les métadonnées de sécurité dans le répertoire local.

13. Procédé selon la revendication 12,
dans lequel le routeur ICN (120) utilise le HALO, ou un deuxième HALO, pour effectuer des recherches dans un magasin de contenu, une table d'intérêt en attente ou une base d'intérêt de transmission du routeur ICN (120).

14. Au moins un support lisible par machine comprenant des instructions qui, lorsqu'elles sont exécutées par le circuit de traitement, amènent le circuit de traitement à exécuter l'un quelconque des procédés des revendications 1 à 13.

15. Système comprenant des moyens pour exécuter l'un quelconque des procédés selon les revendications 1 à 13.
